# EUROPEAN PATENT APPLICATION

(11) **EP 4 105 717 A1**
(43) Date of publication of application: **21.12.2022**
(21) Application number: 21767862.2
(22) Date of filing: 12.03.2021
(51) Int. Cl.: G03B 13/36, G02B 7/09

(54) **DRIVE APPARATUS, CAMERA MODULE, AND ELECTRONIC DEVICE**

(30) Priority: 12.03.2020 CN 202010172570
(71) Applicant: Huawei Technologies Co., Ltd., Shenzhen, Guangdong 518129, (CN)
(72) Inventor: LU, Lei, Shenzhen, Guangdong 518129 (CN); KUO, Li-Te, Shenzhen, Guangdong 518129 (CN); DAN, Jiapeng, Shenzhen, Guangdong 518129 (CN); WANG, Xin, Shenzhen, Guangdong 518129 (CN)
(74) Representative: Isarpatent
(86) International application number: PCT/CN2021/080640
(87) International publication number: WO 2021/180234

(57) **Abstract**

Embodiments of this application provide an actuating device, a camera module, and an electronic device. In the actuating device provided in this application, an actuator is configured to include an actuating magnetic component, a power supply apparatus, and at least one coil. The power supply apparatus is electrically connected to the coil, and the coil is disposed in a magnetic field of the actuating magnetic component. When a current is supplied to the coil, the coil or the actuating magnetic component moves under an action of the magnetic field. In this case, the coil or the actuating magnetic component can drive a motor carrier to move, to drive a lens of the camera module to move, so that zooming of the camera module is completed. With a simple structure, the actuating device in embodiments of this application effectively reduces manufacturing and installation difficulties. In addition, each component is at lower costs than a stepper motor, reducing manufacturing costs of the entire camera module.

## Description

This application claims priority to Chinese Patent Application No. 202010172570.4, filed with the China National Intellectual Property Administration on March 12, 2020 and entitled "ACTUATING DEVICE, CAMERA MODULE, AND ELECTRONIC DEVICE", which is incorporated herein by reference in its entirety.

### TECHNICAL FIELD

Embodiments of this application relate to the field of mobile terminal technologies, and in particular, to an actuating device, a camera module, and an electronic device.

### BACKGROUND

In recent years, photo shooting and video shooting functions have gradually become basic configuration of handheld communication devices such as mobile phones, personal digital assistants, and laptop computers. With higher shooting requirements of users on mobile terminals such as mobile phones, combination of functions of long range shooting with a long focal length and wide-angle shooting with a short focal length has become a standard configuration of mobile terminals that are currently popular with the users. However, mobile terminals that meet shooting requirements of different focal lengths need camera modules with an optical zooming function.

To implement the optical zooming function of the camera modules, actuating motors need to cover an increasingly large movement stroke. In a related technology, a camera module in a mobile terminal includes a plurality of lenses disposed in parallel and spaced from each other and an actuating device configured to drive the lenses to move. The actuating device includes a stepper motor and a screw thread that is installed on a ball screw on the plurality of lenses. The stepper motor is connected to the ball screw through the ball screw that acts as an attachment plate. During operation, the stepper motor drives the ball screw to rotate, to drive the plurality of lenses to move in an extension direction of the ball screw, so as to implement the optical zooming of the module.

However, costs of the stepper motor configured to drive the lens to move are high, and requirements on machining accuracy of the ball screw is high, therefore there is a challenge for manufacturing the entire camera module.

### SUMMARY

Embodiments of this application provide an actuating device, a camera module, and an electronic device, to reduce manufacturing costs and manufacturing difficulty of the camera module and the electronic device thereof.

An embodiment of this application provides an actuating device, configured to drive a lens of a camera module to move in a specified direction. The actuating device includes at least one motor carrier and at least one actuator.

Each motor carrier is configured to carry one lens, and is driven by one or more actuators in at least one corresponding actuator.

Each actuator includes at least one actuating magnetic component, a power supply apparatus, and at least one coil. The power supply apparatus is electrically connected to each coil. Each motor carrier is connected to the at least one coil or the at least one actuating magnetic component. The at least one coil and the at least one actuating magnetic component are configured to jointly drive one of the at least one motor carrier to move when the at least one coil is energized.

In the actuating device provided in embodiments of this application, an actuator is configured to include an actuating magnetic component, a coil, and a power supply apparatus. The power supply apparatus is electrically connected to the coil, and the coil is disposed in a magnetic field of the actuating magnetic component. When a current is supplied to the coil, the coil or the actuating magnetic component moves under an action of the magnetic field. In this case, the coil or the actuating magnetic component can drive a motor carrier to move, to drive a lens of the camera module to move, so that zooming of the camera module is completed. In the actuating device in this application, a movement stroke of the motor carrier is related to the length of the actuating magnetic component. Therefore, the motor carrier can implement long-stroke movement by extending the length of the actuating magnetic component, to increase a focal length adjustment range of the camera module and improve user experience. In addition, with a simple structure, the actuating device effectively reduces manufacturing and installation difficulties. In addition, each component is at lower costs than a stepper motor, reducing manufacturing costs of the entire camera module.

In a possible implementation, each actuator further includes a magnetic shielding component, and the magnetic shielding component includes a first magnetic shielding portion and two second magnetic shielding portions.

The two second magnetic shielding portions are oppositely disposed at two ends of the first magnetic shielding portion. The first magnetic shielding portion and the two second magnetic shielding portion enclose installation space. The actuating magnetic component is located in the installation space, and is fastened to the first magnetic shielding portion. Each motor carrier is connected to the at least one coil or the first magnetic shielding portion.

The actuating magnetic component is disposed in installation space of the magnetic shielding component, to improve structural stability of the actuating magnetic component in the actuating device and shield a magnetic field generated by the actuating magnetic component, so that the magnetic field does not interfere with normal operation of other components of the actuating device.

In a possible implementation, the magnetic shielding component further includes a third magnetic shielding portion.

The third magnetic shielding portion and the first magnetic shielding portion are spaced from each other and disposed in parallel, and two ends of the third magnetic shielding portion are connected to the two second magnetic shielding portions.

Two ends of the actuating magnetic component separately extend to the two second magnetic shielding portions, and the coil is movably sleeved on the third magnetic shielding portion. The energized coil moves, under an action of the magnetic field, relative to the first magnetic shielding portion in an extension direction of the third magnetic shielding portion.

In embodiments of this application, the third magnetic shielding portion is disposed, the coil is sleeved on the third magnetic shielding portion, and the two ends of the actuating magnetic component separately extend to the two second magnetic shielding portions. In this case, a magnetic induction line perpendicular to the coil may be formed due to a magnetic effect, and only a part of the coil between the first magnetic shielding portion and the third magnetic shielding portion can induce the magnetic field. In addition, the coil is electrically connected to the power supply apparatus, to form a loop current on the energized coil. The current produces an Ampere force in a magnetic field perpendicular to the coil. In this case, when the motor carrier connected to the lens of the camera module is connected to the coil, and the magnetic shielding component is fastened to a fixed component in a terminal, the energized coil drives the motor carrier to move in an extension direction of the third magnetic shielding portion under an action of the Ampere force. Alternatively, when the motor carrier is connected to the first magnetic shielding portion, and the coil is fastened to a fixed component in a terminal, after the coil is energized, the first magnetic shielding portion drives the motor carrier to move in an extension direction of the third magnetic shielding portion due to action and reaction forces. This implements movement of the lens and zooming of the camera module.

In a possible implementation, the actuating device further includes a base.

The at least one motor carrier, the at least one actuator, and the at least one lens are all disposed on the base.

In a possible implementation, each motor carrier is connected to the at least one coil of one or more corresponding actuators, and the at least one actuating magnetic component is fixedly connected to the base.

In a possible implementation, each motor carrier is connected to the at least one coil of one or more corresponding actuators, and the magnetic shielding component and the at least one actuating magnetic component are fixedly connected to the base.

In a possible implementation, the base includes at least one side wall, and the magnetic shielding component is at least partially fastened to the side wall of the base.

In a possible implementation, there are a plurality of motor carriers, and the plurality of motor carriers are spaced from each other in an extension direction of the third magnetic shielding portion. There are a plurality of lenses, and the plurality of lenses are spaced from each other in an axis direction of the lenses.

In a possible implementation, there are a plurality of coils, and the plurality of coils are sleeved on the third magnetic shielding portion and spaced from each other.

A holder is disposed on each motor carrier, the holder is provided with a limiting hole, the holder is disposed on the third magnetic shielding portion, and the coil connected to the motor carrier is clamped into the limiting hole of the holder.

In a possible implementation, there are a plurality of actuating magnetic components, and the plurality of actuating magnetic components are successively disposed in an extension direction of the first magnetic shielding portion. At least one coil is disposed on a side of each actuating magnetic component, and the motor carrier is connected to the coil, so that the coil drives the motor carrier to move after the coil is energized.

In a possible implementation, the coil is fastened to the base, and the actuating magnetic component is disposed on the first magnetic shielding portion. The actuating magnetic component and the motor carrier are respectively located on two sides of the first magnetic shielding portion. Each motor carrier is connected to the first magnetic shielding portion. The actuating magnetic component is configured to move after the coil is energized, to drive the first magnetic shielding portion and the motor carrier to move.

In a possible implementation, each motor carrier is connected to a corresponding coil.

A holder is disposed on each motor carrier, the holder is provided with a limiting hole, the holder is disposed on the third magnetic shielding portion, and the coil is clamped into the limiting hole of the holder. In this case, when moving along the third magnetic shielding portion, the energized coil can push a side wall of the limiting hole to drive the motor carrier to reciprocate, to move the lens. In addition, this simplifies a connection structure between the motor carrier and the coil, to improve efficiency of installation between the motor carrier and the actuator.

In a possible implementation, there are a plurality of motor carriers, and the plurality of motor carriers are spaced from each other in an extension direction of the third magnetic shielding portion. There are a plurality of lenses, and the plurality of lenses are spaced from each other in an axis direction of the lenses. Each motor carrier is connected to a corresponding lens.

There are a plurality of coils, and the plurality of coils are sleeved on the third magnetic shielding portion and spaced from each other. Each motor carrier is connected to the magnetic shielding component, or is connected to a corresponding coil.

In embodiments of this application, the plurality of coils are sleeved on the third magnetic shielding portion of the actuator, to simultaneously drive the plurality of motor carriers. A quantity of actuators and a quantity of components and parts of the entire actuating device are reduced while driving of the plurality of motor carriers that are spaced from each other is implemented. Therefore, the entire structure is simpler and more compact, and manufacturing and installation efficiency of the actuating device is improved.

In a possible implementation, the actuating magnetic component includes a first part and a second part that are disposed in an extension direction. The first part and the second part have opposite magnetism. The coil is located on a side that is of the actuating magnetic component and that is away from the first magnetic shielding portion.

An axis direction of the coil is perpendicular to an extension direction of the actuating magnetic component. A part of the coil is located on a side of the first part, and the other part of the coil is located on a side of the second part. The energized coil moves, under an action of the magnetic field, relative to the first magnetic shielding portion in an extension direction of the actuating magnetic component. The extension direction of the actuating magnetic component is consistent with a specified direction.

In embodiments of this application, the two parts of the actuating magnetic component that are disposed in the extension direction have opposite magnetism. Two parts of the coil that are disposed in the extension direction of the actuating magnetic component are respectively disposed on a side of the first part and the second part. In this case, when power is supplied to the coil, the coil moves in the extension direction of the actuating magnetic component under an action of the magnetic field. This can ensure that the coil or the first magnetic shielding portion to drive the motor carrier to move in a specified direction, to drive the lens. In embodiments of this application, the motor carrier can change the movement stroke of the motor carrier by adjusting extended lengths of the first part and the second part of the actuating magnetic component. This ensures a simple structure and convenient installation and operation.

In a possible implementation, the actuating magnetic component further includes a fourth magnetic shielding portion.

Two ends of the fourth magnetic shielding portion in an extension direction are respectively connected to the two second magnetic shielding portions. The first magnetic shielding portion is connected to a side of the fourth magnetic shielding portion. The first magnetic shielding portion, the two second magnetic shielding portions, and the fourth magnetic shielding portion jointly enclose the installation space. Both the coil and the actuating magnetic component are disposed on the fourth magnetic shielding portion.

Disposition of the fourth magnetic shielding portion further isolates the magnetic field, and improves structural stability of the actuating magnetic component and the coil in the actuating device.

In a possible implementation, there are a plurality of motor carriers, and the plurality of motor carriers are spaced from each other in an extension direction of the first magnetic shielding portion. There are a plurality of lenses, and the plurality of lenses are spaced from each other in the extension direction of the first magnetic shielding portion. Each motor carrier is connected to a corresponding lens.

There are a plurality of actuating magnetic components, the plurality of actuating magnetic components are successively disposed in the extension direction of the first magnetic shielding portion. One coil is disposed on a side of each actuating magnetic component. Each motor carrier is connected to the magnetic shielding component, alternatively, is connected to a corresponding coil.

In embodiments of this application, a plurality of coils are disposed in the actuating magnetic component of the actuator, to simultaneously drive the plurality of motor carriers. A quantity of actuators and a quantity of components and parts of the entire actuating device are reduced while driving of the plurality of motor carriers that are spaced from each other is implemented. Therefore, the entire structure is simpler and more compact, and manufacturing and installation efficiency of the actuating device is improved.

In a possible implementation, the actuating device further includes a base. The motor carrier, the actuator, and the lens are all disposed on the base, to improve installation stability of the actuating device and the lens. This can also ensure a more compact structure of the camera module formed by the entire actuating device and the lens.

In a possible implementation, the motor carrier is connected to the coil, and the magnetic shielding component is connected to the base.

The magnetic shielding component is connected to the base, so that the magnetic shielding component remains stable. The motor carrier is connected to the coil, so that the energized coil stably moves in the extension direction of the first magnetic shielding portion under the action of the magnetic field, and the motor carrier stably move parallel to the first magnetic shielding portion. In addition, the magnetic shielding component of the actuator is fastened to the base. In this case, when the actuating device is installed on an electronic device, installation can be completed by directly fastening the base to the electronic device. This can improve installation efficiency of the actuating device in the electronic device, and ensures a more compact structure of the entire actuating device.

In a possible implementation, the power supply apparatus is connected to the motor carrier, so that the power supply apparatus can move with the motor carrier, to form a stable and controllable current in the coil fastened to the motor carrier. This produces a stable driving force for the coil, an implement stable driving of the motor carrier.

In a possible implementation, the power supply apparatus further includes a flexible printed circuit board.

The flexible printed circuit board includes a fixing portion and a movable portion connected to the fixing portion. The fixing portion is connected to the base. One end of the movable portion is connected to the motor carrier, and at least a part of the movable portion extends in a movement direction of the motor carrier.

One end of the movable portion of the flexible printed circuit board of the power supply apparatus is connected to the motor carrier, so that the motor carrier drives the movable portion to move stably, to stably supply power to the coil. In addition, the movable portion is connected to the base by using the fixing portion, so that the flexible printed circuit board ensures stable transmission of a current and a signal between the flexible printed circuit board and a main control board outside the base, further ensuring a stable current input to the coil.

In a possible implementation, one end that is of the movable portion and that is connected to the motor carrier is configured as an arc-shaped section. The movable portion is connected to the motor carrier by using the arc structure, to prevent one end that is of the flexible printed circuit board and that is connected to the motor carrier from being broken and ensure the stable current input to the coil.

In a possible implementation, one end of the movable portion is provided with a reinforcement component, and the movable portion is connected to the motor carrier by using the reinforcement component. This can improve connection strength between the flexible printed circuit board and the motor carrier, to improve reliability for the movable portion of the flexible printed circuit board to move with the motor carrier.

In a possible implementation, the flexible printed circuit board further includes a transition portion, and the fixing portion is connected to the movable portion by using the transition portion, so that the entire movable portion can extend in a movement direction of the motor carrier. In this case, the motor carrier can drive the movable portion to move parallel to the second magnetic shielding portion for a longer stroke, and stability of the fixing portion is not affected when the motor carrier drives the movable portion to move in the movement direction.

In a possible implementation, the actuating device further includes a position detection apparatus.

The position detection apparatus includes a Hall element and a magnetic sensing component. The Hall element is disposed on the motor carrier, and the magnetic sensing component is disposed on the base. Both the Hall element and the power supply apparatus are in a signal connection to a processor of the camera module.

The Hall element is configured to detect magnetic field strength of the magnetic sensing component, and send a signal to the processor when the Hall element detects that the magnetic field strength of the magnetic sensing component reaches a preset threshold. The processor controls, based on the signal, the power supply apparatus to stop supplying power to the coil.

The Hall element and the magnetic sensing component are disposed, to detect and control a movement position of the motor carrier, so as to implement closed-loop control of the motor carrier. In addition, the Hall element is fastened to the motor carrier, so that the power supply apparatus located on the motor carrier stably supplies power to the Hall element, ensuring normal operation of the Hall element.

In a possible implementation, the motor carrier is connected to the first magnetic shielding portion, and the coil is connected to the base. The base is provided with an avoidance passage for the magnetic shielding component to move.

The coil is connected to the base, so that the coil remains stable. The motor carrier is connected to the first magnetic shielding portion. In this case, the energized coil produces an Ampere force parallel to the first magnetic shielding portion under the action of the magnetic field. Due to action and reaction forces, the Ampere force drives the magnetic shielding component to stably move in the avoidance passage in the extension direction of the first magnetic shielding portion, to drive the motor carrier to stably move parallel to the first magnetic shielding portion.

In a possible implementation, the power supply apparatus is connected to the base, to stably supply power to the coil disposed on the base, so that the magnetic shielding component stably reciprocates through the coil. In addition, the power supply apparatus is connected to the base, to simplify a structure of the motor carrier. This improves installation efficiency of the actuating device, and reduces a load of the motor carrier, so that the magnetic shielding component can effectively drive the motor carrier to move.

In a possible implementation, the actuating device further includes a position detection apparatus.

The position detection apparatus includes a Hall element and a magnetic sensing component. The Hall element is disposed on the base, and the magnetic sensing component is disposed on the motor carrier. Both the Hall element and the power supply apparatus are in a signal connection to a processor of the camera module.

The Hall element is configured to detect magnetic field strength of the magnetic sensing component, and send a signal to the processor when the Hall element detects that the magnetic field strength of the magnetic sensing component reaches a preset threshold. In this case, the processor controls the power supply apparatus to stop supplying power to the coil.

The Hall element and the magnetic sensing component are disposed, to detect and control a movement position of the motor carrier, so as to implement closed-loop control of the motor carrier. In addition, the Hall element is fastened to the base, so that the power supply apparatus on the base stably supplies power to the Hall element, ensuring normal operation of the Hall element. In addition, both the Hall element and the power supply apparatus are disposed on the base, so that an installation structure of the motor carrier is further simplified, and a structure of the entire actuating device is more reasonable and compact.

In a possible implementation, the motor carrier includes two oppositely disposed carriers. The two carriers are respectively configured to connect to two lens connection portions that are located on two sides of an axis of the lens.

There are at least two actuators. The at least two actuators are respectively connected to two opposite carriers, so as to drive the two carriers to move, to drive the lens to move.

The motor carrier is configured to include two opposite carriers. The two carriers are respectively connected to two ends of the axis of the lens, so that the lens is stably fastened to the motor carrier. During operation, the two actuators respectively drive the two carriers to move, to implement stable driving of the lens. This ensures that the lens stably moves in a movement direction of the two carriers, and implements long range zooming.

In a possible implementation, in the plurality of motor carriers,
each carrier on a same side is respectively connected to a corresponding coil in the actuator, and the first magnetic shielding portion in the actuator is connected to the base. In this case, after each coil is energized, the carriers on the same side can be simultaneously driven.

Alternatively, each carrier on a same side is connected to the first magnetic shielding portion in the actuator, and all coils of the actuator are connected to the base. In this case, an Ampere force parallel to the extension direction of the first magnetic shielding portion under the action of the magnetic field is generated in the energized coil. According to the action force and the reaction force, the first magnetic shielding portion in the actuator drives the plurality of carriers on the same side to move in the extension direction of the first magnetic shielding portion, so that the plurality of motor carriers are simultaneously driven. The quantity of actuators is reduced, and a structure and an installation process of the entire actuating device are simplified.

In a possible implementation, two first guide rails are disposed side by side on the base, the two carriers are respectively sleeved on corresponding first guide rails, and each carrier is driven by the actuator to move along a corresponding first guide rail, so that the carrier moves along a straight line under support of the first guide rail, ensuring stable zooming of the lens.

In a possible implementation, the camera module includes two second guide rails correspondingly disposed on sides that are of the two first guide rails and that are away from a bottom of the base. The second guide rails are disposed parallel to the first guide rails, and the two lens connection portions are respectively sleeved on the second guide rails. Each lens connection portion is driven by the carrier to move along a corresponding second guide rail.

A buffer is disposed between each carrier and the lens connection portion to absorb parallelism tolerance between the first guide rail and the second guide rail that are vertically disposed, so that the carrier and the lens from is not stuck due to close contact in a moving process, and the lens and the motor carrier can decouple from each other.

In a possible implementation, the buffer is a spring plate, to simplify a structure of the buffer and improve installation efficiency of the actuating device.

In a possible implementation, the motor carrier further includes a holding portion.

Two ends of the holding portion are respectively connected to two opposite carriers, and the holding portion is configured to hold the lens. Disposition of the holding portion increases an action area between the lens and the motor carrier, improves stability of the lens on the motor carrier, and ensures that the motor carrier stably drives the lens.

In a possible implementation, at least a part of a side surface that is of each carrier and that faces toward the lens is configured as an arc-shaped surface that fits a side wall shape of the lens. This can improve a degree of fit between a side wall of the lens and a side wall of the carrier, and reduce an installation gap between the lens and the motor carrier, so that the installed actuating device is more compact. In addition, the foregoing disposition also avoids damage to the lens caused by a side wall that is of the carrier and that faces toward the lens when the lens is installed on the motor carrier.

An embodiment of this application further provides a camera module, including at least one lens and the actuating device.

An actuator of the actuating device is connected to the lens by using a motor carrier, to drive the lens to move in a specified direction.

In this application, the actuating device is disposed in the camera module to drive the lens to move in the specified direction, to implement a long range zooming process of the lens. With a simple structure, the actuating device effectively reduces manufacturing and installation difficulties of the entire camera module. In addition, each component is at lower costs than a stepper motor, reducing manufacturing costs of the entire camera module.

An embodiment of this application further provides an electronic device, including a housing and the camera module, where the camera module is disposed on the housing.

In this application, the camera module is disposed in the electronic device, to implement long range zooming of the camera module of the electronic device, and ensure functions of long range shooting with a long focal length and wide-angle shooting with a short focal length of the electronic device. This simplifies a structure of the electronic device, and reduces manufacturing and installation difficulties. In addition, each component is at lower costs than a stepper motor, reducing manufacturing costs of the entire electronic device.

### BRIEF DESCRIPTION OF DRAWINGS

FIG. 1 is a schematic diagram of a structure of a mobile terminal according to this application;
FIG. 2 is a sectional view along a line A-A in FIG. 1;
FIG. 3 is a schematic diagram of a first structure of an actuating device in FIG. 2;
FIG. 4 is a schematic diagram of a partial structure in FIG. 3;
FIG. 5 is a schematic diagram of the structure of an actuator in FIG. 3;
FIG. 6 is a sectional view along a line B-B in FIG. 5;
FIG. 7 is a top view of FIG. 3;
FIG. 8 is an installation diagram of an actuating device and a lens in FIG. 3;
FIG. 9 is a sectional view along a line C-C in FIG. 7;
FIG. 10 is a partial schematic diagram of an internal structure in FIG. 3;
FIG. 11 is a top view of a power supply apparatus in FIG. 10;
FIG. 12 is a main view of a power supply apparatus in FIG. 10;
FIG. 13 is a schematic diagram of a second structure of an actuating device in FIG. 2;
FIG. 14 is a schematic diagram of a partial split structure of an actuating device in FIG. 13;
FIG. 15 is a main view of FIG. 14;
FIG. 16 is a schematic diagram of a third structure of an actuating device in FIG. 2; and
FIG. 17 is a sectional view of a part along a line D-D in FIG. 16.

Description of reference numerals:
10: Housing; 20: Camera module;
11: Light transmission area; 21: Lens; 22: Actuating device; 23: Main control board; 24: Second guide rail;
211: Lens connection portion; 212: Lens body portion; 221: Motor carrier; 222: Actuator; 223: Base; 224: Position detection apparatus; 225: First guide rail; 226: Buffer;
2211: Carrier; 2212: Holding portion; 2213: Holder; 2214: Installation plate; 2215: Installation position; 2221: Actuating magnetic component, 2222: Magnetic shielding component, 2223: Power supply apparatus; 2224: Coil; 2231: Sub-base; 2232: Reinforcement base; 2233: Light avoidance opening; 2234: Installation base; 2241: Hall element; 2242: Magnetic sensing component;
2211a: Arc-shaped surface; 2221a: First part; 2221b: Second part; 2222a: First magnetic shielding portion; 2222c: Second magnetic shielding portion; 2222b: Third magnetic shielding portion; 2222d: Fourth magnetic shielding portion; 2223a: Fixing portion; 2223b: Movable portion; 2223c: Arc-shaped section; 2223d: Reinforcement component; 2223e: Transition portion; 2223f: Electrical connection terminal; 2231a: Avoidance passage; 2224a: Left half part; and 2224b: Right half part.

### DESCRIPTION OF EMBODIMENTS

Terms used in implementations of this application are only used for explaining specific embodiments of this application, but are not intended to limit this application.

A shooting function has gradually become basic configuration of a handheld communication device such as a mobile phone, a personal digital assistant, and a laptop computer. With a higher shooting requirement of a user on a mobile terminal such as a mobile phone, conventional shooting cannot meet a requirement of the user. Long range shooting with a long focal length performed by, for example, a periscope camera module, and wide-angle shooting with a short focal length, performed by, for example, a conventional CCM module can be complementary to each other. Therefore, their combination has become a standard configuration of a mobile terminal that is currently popular with the user. The camera module that meets shooting requirements of different focal lengths is an optical zoom camera module.

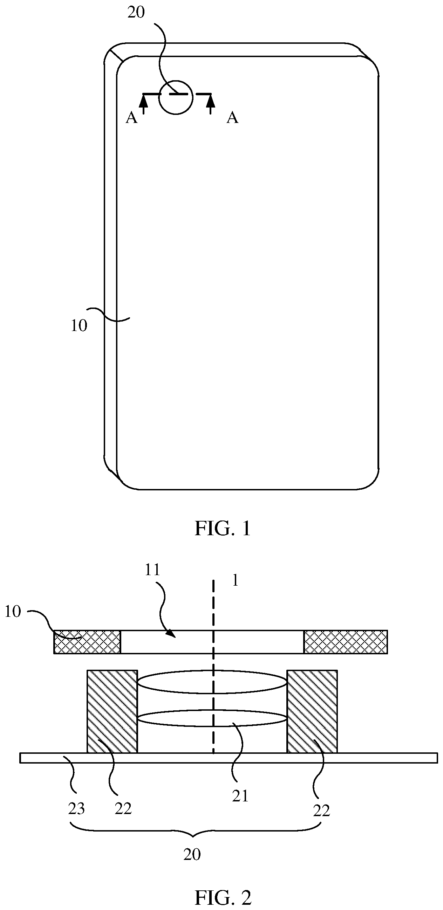

FIG. 1 is a schematic diagram of a structure of a mobile terminal according to this application. FIG. 2 is a sectional view along a line A-A in FIG. 1. Refer to FIG. 1 and FIG. 2. A mobile phone is used as an example to describe a camera module in a mobile terminal in this application. Refer to FIG. 1 and FIG. 2. The camera module 20 is disposed on a housing 10 of the mobile phone. The camera module 20 includes a plurality of lenses 21 that are spaced from each other and face toward an interior of the housing 10 along an axis of a light transmission area 11 on the housing 10. The plurality of lenses 21 are connected to an actuating device 22. The actuating device 22 is in a signal connection to a main control board 23. The main control board 23 controls the actuating device 22 to drive the plurality of lenses 21 to approach or move away from the light transmission area 11 on the housing 10, to implement zooming of the camera module. This can meet requirements of a user for long range shooting with a long focal length and short range shooting with a short focal length.

To implement a large-scale optical zooming function of the camera module 20, the actuating device 22 needs to be able to drive the lens 21 to implement long-stroke movement. In a related technology, the actuating device 22 includes a stepper motor and a screw thread that is installed on a ball screw on the plurality of lenses 21. The stepper motor is connected to the ball screw through the ball screw that acts as an attachment plate. During operation, the stepper motor drives the ball screw to rotate, to drive the plurality of lenses 21 to move in an extension direction of the ball screw, so as to implement the optical zooming of the camera module 20.

However, costs of the stepper motor configured to drive the lens 21 to move are high, and requirements on machining accuracy of the ball screw is high, therefore there is a challenge for manufacturing the entire camera module 20.

Embodiments of this application provide the actuating device, the camera module, and an electronic device. An actuator in the actuating device is configured to include an actuating magnetic component, a coil, and a power supply apparatus. The power supply apparatus is electrically connected to the coil, and the coil is disposed in a magnetic field of the actuating magnetic component. When a current is supplied to the coil, the coil moves relative to the actuating magnetic component on a path parallel to a specified direction under an action of the magnetic field. In this case, the motor carrier is connected to the coil or the actuating magnetic component, so that the motor carrier connected to the coil or the actuating magnetic component moves along the path parallel to the specified direction, to drive the lens of the camera module to move, so that zooming of the camera module is completed. In the actuating device in this application, a movement stroke of the motor carrier is related to the length of the actuating magnetic component. Therefore, the motor carrier can implement long-stroke movement by extending the length of the actuating magnetic component, to increase a focal length adjustment range of the camera module and improve user experience. In addition, with a simple structure, the actuating device effectively reduces manufacturing and installation difficulties. In addition, each component is at lower costs than a stepper motor, reducing manufacturing costs of the entire camera module.

An actuator with a special structure drives the motor carrier connected to the lens, to implement long range zoom of the lens and reduce manufacturing and installation difficulties of the actuating device. In addition, each component is at lower costs than a stepper motor, reducing manufacturing costs of the entire camera module. The following describes the actuating device in embodiments of this application in detail by using three different embodiments.

### Embodiment 1

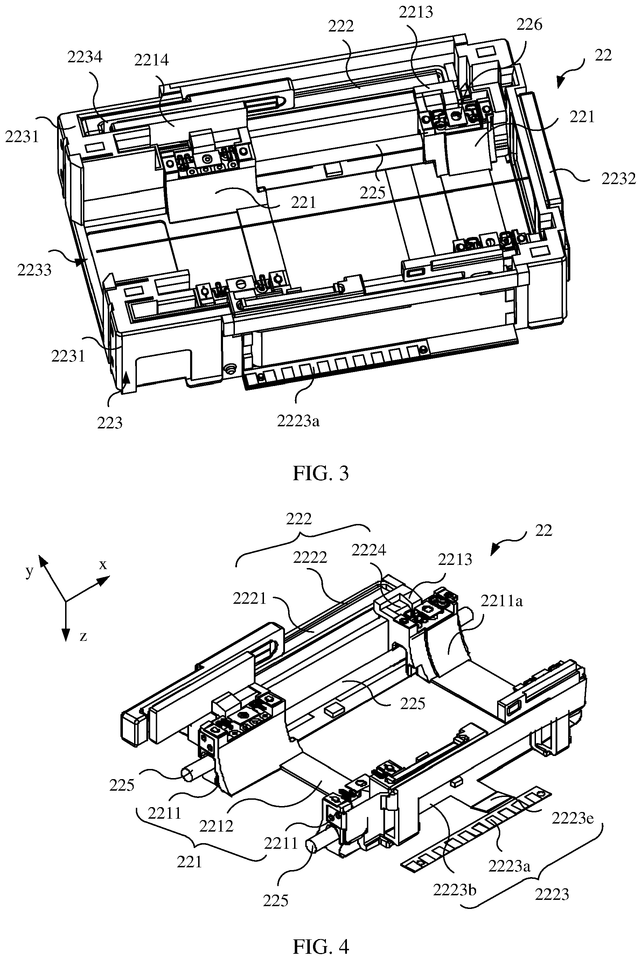

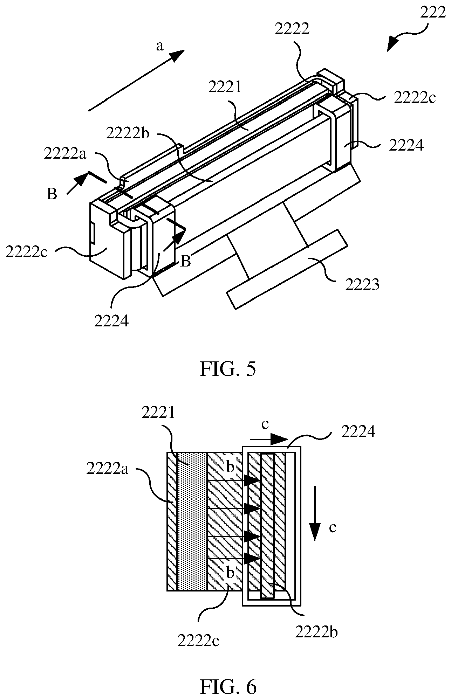

FIG. 3 is a schematic diagram of a first structure of an actuating device in FIG. 2. FIG. 4 is a schematic diagram of a partial structure in FIG. 3. FIG. 5 is a schematic diagram of the structure of an actuator in FIG. 3. Refer to FIG. 3. An embodiment of this application provides the actuating device 22. The actuating device 22 may include at least one motor carrier 221 and at least one actuator 222. Each motor carrier 221 is connected to a corresponding lens 21 in the camera module 20. The actuator 222 is configured to drive the motor carrier 221 to move in a direction of a principal axis *l* (as shown in FIG. 2) of the lens 21. In this case, the lens 21 is driven to move in a specified direction (as indicated by an x direction in FIG. 4), and zooming of the lens 21 is implemented.

It should be noted that, in this embodiment of this application, a plurality of actuators 222 may simultaneously drive one motor carrier 221, or one actuator 222 may drive one motor carrier 221. That is, it may be considered that each motor carrier 221 corresponds to one or more actuators 222, and each motor carrier 221 is driven by corresponding one or more actuators 222. In other words, one or more actuators 222 also correspond to one motor carrier 221, and are configured to drive a corresponding motor carrier 221.

Refer to FIG. 3. In an actual application, the camera module 20 includes a plurality of coaxial lenses 21 that are sequentially spaced from each other, in other words, the plurality of lenses 21 are spaced from each other in a direction. To implement long-stroke movement of the plurality of lenses 21, a plurality of motor carriers 221 in this embodiment may be sequentially spaced from each other in the direction of the principal axis *l* (as shown in FIG. 2) of the lens 21. As shown in FIG. 3, each motor carrier 221 is connected to the corresponding lens 21, so that the actuating device 22 simultaneously drives the plurality of lenses 21 stably.

Certainly, in this embodiment of this application, it is possible that when the camera module 20 has one lens 21, the actuating device 22 includes a structure of one motor carrier 221.

It may be understood that the specified direction is consistent with an extension direction of the principal axis *l* of the lens 21.

As show in FIG. 4 and FIG. 5, one actuator 222 may include at least one actuating magnetic component 2221, a power supply apparatus 2223, and at least one coil 2224. The actuating magnetic component 2221 may be a component having a magnetic field, such as a magnet. The power supply apparatus 2223 is an apparatus that provides an electrical signal to the coil 2224.

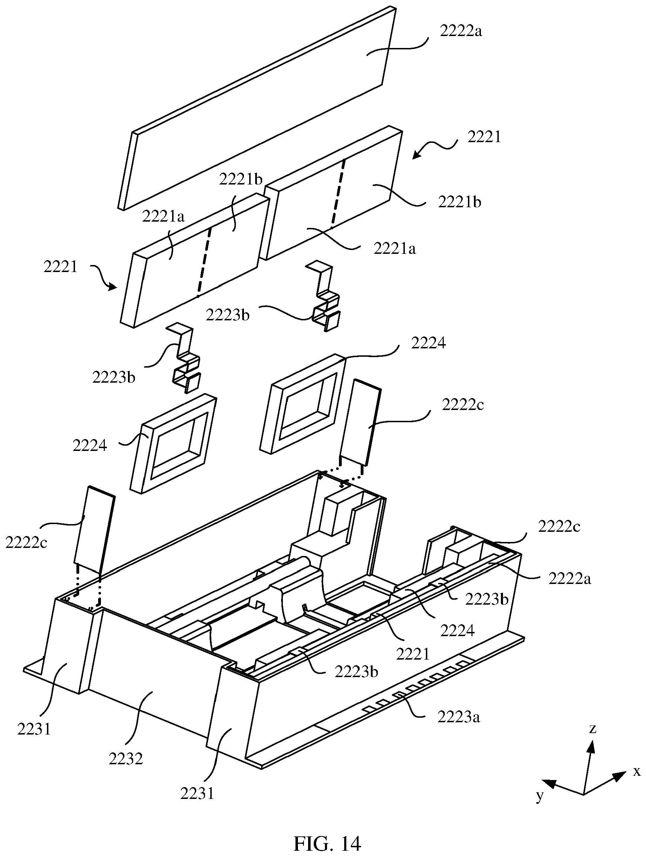

In this application, when there are a plurality of actuators 222, the actuators 222 may share the power supply apparatus 2223, or share the actuating magnetic component 2221. For example, one power supply apparatus 2223 supplies power to coils 2224 in a plurality of actuators 222. Certainly, each actuator 222 may also use one independent power supply apparatus 2223. Similarly, the actuators 222 may also share an actuating magnetic component 2221. For example, when there are two actuators 222 and each actuator 222 includes one coil 2224, these coils 2224 may share one actuating magnetic component 2224 (as shown in an example in FIG. 4). Certainly, one actuating magnetic component 2224 (as shown in an example in FIG. 14) may alternatively be separately configured for the two coils 2224.

Each motor carrier 221 is connected to the at least one coil 2224 of one or more corresponding actuators 222, and the at least one actuating magnetic component 2221 is fixedly connected to the base 223.

In this application, an example in which one power supply apparatus 2223 supplies power to one actuator 222 is used for description.

As show in FIG. 5, the power supply apparatus 2223 is electrically connected to each coil 2224, to supply power to each coil 2224, so that each coil 2224 generates a stable loop current. Specifically, the power supply apparatus 2223 may include a flexible printed circuit board. One end of the flexible printed circuit board is electrically connected to the coil 2224, and the other end of the flexible printed circuit board is electrically connected to the main control board 23 of the camera module 20. The main control board 23 is electrically connected to a battery of the electronic device. The battery transmits a current to the coil 2224 by using the main control board 23 and the flexible printed circuit board. In addition, the main control board 23 can control a power supply parameter such as power supply duration, to transmit a stable and controllable current to the coil 2224.

FIG. 6 is a sectional view along a line B-B in FIG. 5. As show in FIG. 5 and FIG. 6, each coil 2224 in this embodiment of this application is located in the magnetic field of the actuating magnetic component 2221. Under the action of the magnetic field, the energized coil 2224 generates a current. An Ampere force parallel to the principal axis *l* of the lens 21 is produced in the current under the action of the magnetic field. Under the action of the Ampere force, the coil 2224 moves relative to the actuating magnetic component 2221 on a path parallel to a specified direction.

It may be understood that a cross-sectional shape of the coil 2224 may be any structure, provided that the energized coil 2224 has an Ampere force in a specified direction (including an Ampere force component in the specified direction). In this case, movement of the coil 2224 in a direction other than the specified direction may be restricted, so that the coil 2224 moves relative to the actuating magnetic component 2221 only on the path parallel to the specified direction.

For example, a limiting portion (not shown) may be disposed in the camera module 20. The limiting portion is configured to limit the movement of the coil 2224 in a direction other than the specified direction. For example, the limiting portion may be a fixing plate. The fixing plate is disposed in a direction that has an included angle with the specified direction of the coil 2224, so that the coil 2224 moves only in the specified direction. A structure of the limiting portion is not specifically limited in this embodiment of this application.

It should be noted that for the Ampere force generation principle, reference may be directly made to related content in a conventional technology. Details are not described herein again.

Refer to FIG. 4. In this embodiment of this application, each motor carrier 221 is connected to a corresponding coil 2224. Under the action of the magnetic field, the energized coil 2224 drives the motor carrier 221 to move in the direction of the principal axis *l* (a direction indicated by x in FIG. 4) of the lens 21. In this case, the lens 21 is driven to move in a specified direction, and a zooming function is implemented.

One coil 2224 and one motor carrier 221 are used as an example. The actuating magnetic component 2221 may be connected to the camera module 20 or a stationary component in the mobile phone, to ensure that the actuating magnetic component 2221 is fixed. The coil 2224 is connected to the motor carrier 221. In this case, the energized coil 2224 moves in the x direction under the action of the magnetic field, to drive the motor carrier 221 to move in the x direction. This can implement stable movement of the lens 21 connected to the motor carrier 221 and a long range zooming function.

In this embodiment of this application, the motor carrier 221 may be connected to the coil 2224 in a plurality of manners. For example, the motor carrier 221 may be connected to the coil 2224 through fastening such as bonding, clamping, or screw connection.

Certainly, refer to FIG. 4. As mentioned in the following, a holder 2213 may be disposed on the motor carrier 221. The holder 2213 is provided with a limiting hole, and the holder 2213 is disposed on the third magnetic shielding portion 2222b, and the coil 2224 sleeved on the third magnetic shielding portion 2222b is clamped into the limiting hole of the holder 2213. In this case, when moving on the third magnetic shielding portion 2222b, the energized coil 2224 can drive, by using the holder 2213, the motor carrier 221 to move synchronously. A connection manner between the motor carrier 221 and the coil 2224 is not specifically limited in this embodiment of this application.

A direction of an ampere force acting on the coil 2224 may be parallel to an extension direction of the actuating magnetic component 2221. In this case, the extension direction of the actuating magnetic component 2221 is consistent with the direction (in other words, the specified direction) of the principal axis *l* of the lens 21. The energized coil 2224 may drive the motor carrier 221 to move in the extension direction of the actuating magnetic component 2221, so that the lens 21 connected to the motor carrier 221 moves in the specified direction.

It may be understood that, because the Ampere force in the coil 2224 is generated under the action of the magnetic field of the actuating magnetic component 2221, in the actuating device in this application, a movement stroke of the motor carrier 221 is related to the length of the actuating magnetic component 2221. In this case, the motor carrier 221 can implement long-stroke movement by extending the length of the actuating magnetic component 2221, to increase a focal length adjustment range of the camera module 20 and improve user experience. In addition, with a simple structure, the actuating device 22 effectively reduces manufacturing and installation difficulties. In addition, each component is at lower costs than a stepper motor, reducing manufacturing costs of the entire camera module 20.

Still refer to FIG. 5. The actuator 222 may further include a magnetic shielding component 2222. Each magnetic shielding component 2222 includes a first magnetic shielding portion 2222a and two second magnetic shielding portions 2222c. The two second magnetic shielding portions 2222c are oppositely disposed at two ends of the first magnetic shielding portion 2222a. The first magnetic shielding portion 2222a and the two second magnetic shielding portion 2222c enclose installation space of the magnetic shielding component 2222. The actuating magnetic component 2221 is located in the installation space, and is fastened to the first magnetic shielding portion 2222a. The motor carrier 221 may be connected to the coil 2224.

An extension direction of the first magnetic shielding portion 2222a is consistent with the foregoing specified direction. In this case, the energized coil 2224 may drive the motor carrier 221 to move in the extension direction (a direction indicated by a in FIG. 5) of the first magnetic shielding portion 2222a, so that the lens 21 connected to the motor carrier 221 moves in the specified direction.

In this embodiment of this application, the extension direction of the first magnetic shielding portion 2222a is consistent with the direction of the principal axis of the lens 21.

During specific disposition, the first magnetic shielding portion 2222a and the second magnetic shielding portion 2222c may be plate-like components having a magnetic shielding function, and the plate-like components may be made of a soft magnetic material such as permalloy or a ferro-aluminum alloy. In this way, the magnetic field generated by the actuating magnetic component 2221 does not cause interference to a component outside the magnetic shielding component 2221, and a magnetic field in an external environment does not cause interference to the magnetic field generated by the actuating magnetic component 2221.

Still refer to FIG. 5. To further improve magnetic shielding effect of the magnetic shielding component 2222, the actuating magnetic component 2221 in some examples may further include a third magnetic shielding portion 2222b. The third magnetic shielding portion 2222b and the first magnetic shielding portion 2222a are spaced from each other and disposed in parallel, and two ends of the third magnetic shielding portion 2222b are connected to the two second magnetic shielding portions 2222c. In this case, the magnetic shielding component 2222 forms a stable ring structure, to improve structure stability of the magnetic shielding component 2222. In addition, the closed magnetic shielding component 2222 further isolates the magnetic field.

Refer to FIG. 5. To improve stability of the third magnetic shielding portion 2222b, a bent portion extends from two ends of the third magnetic shielding portion 2222b in a length direction toward inner surfaces of the two second magnetic shielding portions 2222c. The bent portion is separately in close contact with the inner surfaces of the two second magnetic shielding portions 2222c, to increase a contact area between the two ends of the third magnetic shielding portion 2222b and the two second magnetic shielding portions 2222c. This can improve connection strength between the third magnetic shielding portion 2222b and the two second magnetic shielding portions 2222c, to improve structural stability of the entire magnetic shielding component 2222.

In some examples, to simplify a structure of the magnetic shielding component 2222, the first magnetic shielding portion 2222a, the third magnetic shielding portion 2222b, and the two second magnetic shielding portions 2222c of the magnetic shielding component 2222 are integrally formed. This can improve installation efficiency of the magnetic shielding component 2222, and improve structural strength of the magnetic shielding component 2222.

In this embodiment of this application, two ends of the actuating magnetic component 2221 separately extend to two ends of the first magnetic shielding portion 2222a in an extension direction, and the coil 2224 is movably sleeved on the third magnetic shielding portion 2222b. In this case, the coil 2224 can be exposed to a perpendicular magnetic induction line of the actuating magnetic component 2221 at any position in the length direction of the third magnetic shielding portion 2222b.

As shown in FIG. 6, a direction indicated by arrows b is a direction in which the magnetic induction line generated by the actuating magnetic component 2221 acts on the coil 2224. In this embodiment, the actuating magnetic component 2221 may be a magnet disposed in the extension direction of the first magnetic shielding portion 2222a.

During specific installation, the two ends of the actuating magnetic component 2221 may alternatively be separately connected to the two second magnetic shielding portions 2222c, to improve stability of the actuating magnetic component 2221 in the magnetic shielding component 2222. In this case, the magnetic field generated by the actuating magnetic component 2221 is stably perpendicular to a side that is of the coil 2224 and that faces toward the actuating magnetic component 2221.

It may be understood that because a side that is of the coil 2224 and that is away from the actuating magnetic component 2221 is located outside the magnetic shielding component 2222, the side that is of the coil 2224 and that is away from the actuating magnetic component 2221 is not affected by the magnetic field generated by the magnetic shielding component 2222.

The coil 2224 in this embodiment of this application is sleeved on the third magnetic shielding portion 2222b, and the first magnetic shielding portion 2222a and the third magnetic shielding portion 2222b are spaced from each other and disposed in parallel. In this case, at least some coils 2224 inside the magnetic shielding component 2222 are perpendicular to a magnetic induction line that is of the actuating magnetic component 2221 and that passes toward the third magnetic shielding portion 2222b. This can ensure that the energized coil 2224 has an Ampere force parallel to the extension direction of the first magnetic shielding portion 2222a, and an Ampere force acting on an energized coil 2224 inside the magnetic shielding component 2222 has a component in the extension direction (a direction indicated by a in FIG. 5) of the third magnetic shielding portion 2222b, so that the coil 2224 can move along the third magnetic shielding portion 2222b.

The coil 2224 may be a ring coil, a rectangular coil, a square coil, or a coil in another shape that is sleeved on the third magnetic shielding portion 2222b.

For example, as shown in FIG. 5 and FIG. 6, the coil 2224 is a rectangular coil, in other words, a cross-sectional shape of the coil 2224 is a rectangle. The rectangular coil includes a left part, a right part, an upper part, and a lower part.

The left and right parts are respectively located on left and right sides of the third magnetic shielding portion 2222b. In other words, the two parts are respectively located on a side that is of the third magnetic shielding portion 2222b and that faces toward the first magnetic shielding portion 2222a and a side that is of the third magnetic shielding portion 2222b and that is away from the first magnetic shielding portion 2222a. Both the two parts are perpendicular to the extension direction of the third magnetic shielding portion 2222b. A magnetic field generated by the actuating magnetic component 2221 due to a magnetic effect acts on the coil 2224, and is perpendicular to a current on a side that is of the coil 2224 and that is close to the first magnetic shielding portion 2222a, so that the side is subject to an Ampere force that points toward the extension direction of the third magnetic shielding portion 2222b. This can increase a driving force of the coil 2224 in the extension direction of the third magnetic shielding portion 2222b, so that the motor carrier 221 stably moves in the extension direction of the third magnetic shielding portion 2222b.

Refer to FIG. 6. The power supply apparatus 2223 provides a current in a clockwise direction, in other words, a direction indicated by an arrow c, to the coil 2224. The current on the side that is of the coil 2224 and that is close to the first magnetic shielding portion 2222a points upward. After the current is exposed to a perpendicular magnetic field on the current, an Ampere force that is perpendicular to paper and faces toward an interior of the paper is generated. In other words, in FIG. 5, the Ampere force is parallel to an extension direction of the third magnetic shielding portion 2222b and points to the right, that is, a direction indicated by an arrow a.

However, when the power supply apparatus 2223 provides a current in a counterclockwise direction to the coil 2224, the current on the side that is of the coil 2224 and that is close to the first magnetic shielding portion 2222a points downward. After the current is subject to a magnetic field perpendicular to the current, an Ampere force that is perpendicular to paper and faces toward an exterior of the paper is generated. In other words, in FIG. 5, the Ampere force is parallel to an extension direction of the third magnetic shielding portion 2222b and points to the left, that is, an opposite direction of the direction indicated by the arrow a.

The upper and lower parts of the coil 2224 are respectively located on an upper side and a lower side of the third magnetic shielding portion 2222b. After the two parts are energized, a current direction on the two parts is parallel to a direction of the magnetic induction line, and no Ampere force is generated. Therefore, no driving force in any direction is generated on the two parts.

The third magnetic shielding portion 2222b in this embodiment of this application also limits the movement of the coil 2224, to prevent the coil 2224 from moving in a direction other than the extension direction of the third magnetic shielding portion 2222b. This further ensures that the coil 2224 drives the motor carrier 221 to move only in the extension direction of the third magnetic shielding portion 2222b.

In this embodiment, the magnetic shielding component 2222 may be connected to the camera module 20 or a stationary component in the mobile phone. For example, the first magnetic shielding portion 2222a of the magnetic shielding component 2222 is fastened to the camera module 20 or the stationary component of the mobile phone, to ensure that the magnetic shielding component 2222 is fixed and the coil 2224 is connected to the motor carrier 221. In this case, the energized coil 2224 moves in the extension direction of the third magnetic shielding portion 2222b under the action of the magnetic field of the actuating magnetic component 2221, to drive the motor carrier 221 to move parallel to the extension direction of the third magnetic shielding portion 2222b, that is, the direction in which the arrow a is located. This can implement stable movement of the lens 21 connected to the motor carrier 221 and a long range zooming function.

It should be noted that the extension direction of the third magnetic shielding portion 2222b, in other words, the direction indicated by the arrow a, is parallel to an extension direction of the axis *l* of the lens 21. This can ensure that when the coil 2224 drives the motor carrier 221 to move on the third magnetic shielding portion 2222b, the lens 21 can move in the axis direction of the lens 21, that is, the specified direction, to implement a zooming process of the camera module 20.

Refer to FIG. 4. For example, when the power supply apparatus 2223 provides the clockwise current to the coil 2224, the coil 2224 drives the motor carrier 221 to move on the third magnetic shielding portion 2222b in the direction indicated by an arrow x, to dive the lens 21 to move in the direction indicated by the arrow x. When the power supply apparatus 2223 provides the counterclockwise current to the coil 2224, the coil 2224 drives the motor carrier 221 to move on the third magnetic shielding portion 2222b in an opposite direction of the arrow x, to drive the lens 21 to move in the opposite direction of the arrow x.

It may be understood that a motion displacement of the motor carrier 221 is a motion displacement of the coil 2224 on the third magnetic shielding portion 2222b, that is, the motion displacement of the motor carrier 221 is equal to an extended length of the third magnetic shielding portion 2222b minus a length of the coil 2224 in the extension direction of the third magnetic shielding portion 2222b. Therefore, in this embodiment of this application, the movement displacement of the motor carrier 221 may be adjusted by adjusting the extended length of the third magnetic shielding portion 2222b. This can further adjust a zooming range of the lens 21.

Based on the foregoing description, it can be learned that in this embodiment of this application, the actuator 222 can implement long-stroke drive on the motor carrier 221, to ensure long range zooming of the lens 21. A movement stroke of the motor carrier 221 is related to the length of the third magnetic shielding portion 2222b. Therefore, the motor carrier 221 can implement long-stroke motion by extending the length of the third magnetic shielding portion 2222b, to increase a focal length adjustment range of the camera module 20 and improve user experience.

In addition, with a simple structure, the actuating device 22 effectively reduces manufacturing and installation difficulties. In addition, each component is at lower costs than a stepper motor, reducing manufacturing costs of the entire camera module 20.

In addition, the two ends of the actuating magnetic component 2221 extend to the two ends of the third magnetic shielding portion 2222b. In this case, when moving to any position on the third magnetic shielding portion 2222b in the extension direction, the coil 2224 is always in a stable magnetic field of the actuating magnetic component 2221, and a current that is in the coil 2224 and is perpendicular to the magnetic induction line is subject to a stable ampere force. This can ensure that the energized coil 2224 stably moves on the third magnetic shielding portion 2222b, to drive the motor carrier 221.

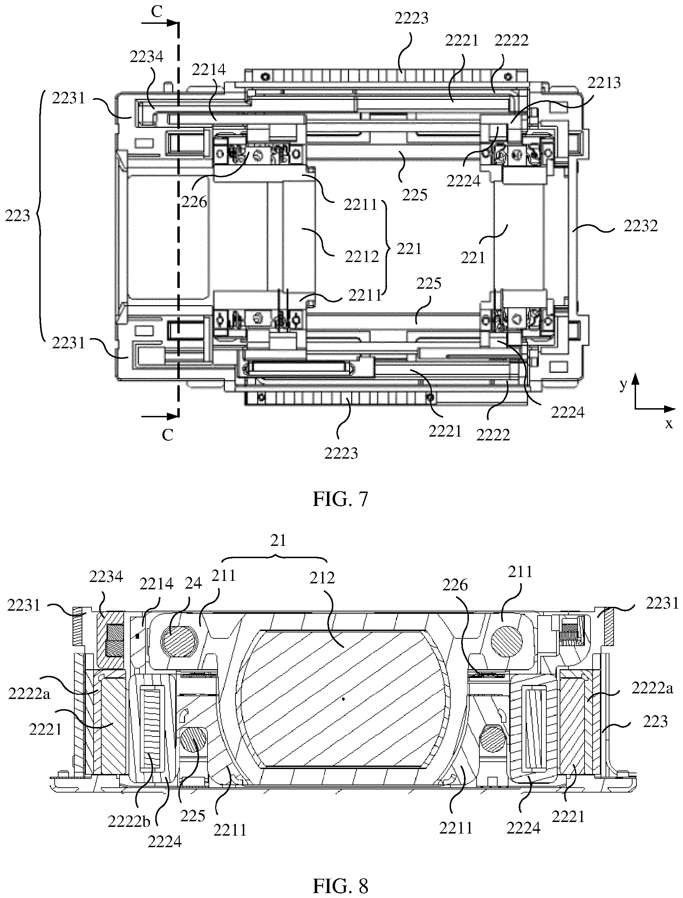

FIG. 7 is a top view of FIG. 3. FIG. 8 is an installation diagram of the actuating device and the lens in FIG. 3. Refer to FIG. 3, FIG. 7, and FIG. 8. To improve structural stability of the actuating device 22 in this embodiment of this application, the actuating device 22 may further include a base 223. The magnetic shielding component 2222 of the actuator 222 is connected to the base 223. For example, the first magnetic shielding portion 2222a of the magnetic shielding component 2222 is connected to the base 223, or the two second magnetic shielding portions 2222c of the magnetic shielding component 2222 may be both connected to the base 223.

Certainly, in some examples, both the first magnetic shielding portion 2222a and the two second magnetic shielding portions 2222c may be all connected to the base 223, to further improve connection strength between the actuator 222 and the base 223. During installation, the magnetic shielding component 2222 of the actuator 222 is fastened to the base 223, and then the base 223 is installed in a housing 10 of the electronic device such as a mobile phone, to implement stable installation of the actuating device 22 in the electronic device.

The magnetic shielding component 2222 of the actuator 222 is installed on the base 223, so that the actuating device 22 is stably fastened to the electronic device through the base 223, to ensure that the magnetic shielding component 2222 cannot move. In this case, the energized coil 2224 stably moves in the extension direction of the third magnetic shielding portion 2222b under the action of the magnetic field, to drive the motor carrier 221 to stably move parallel to the extension direction of the third magnetic shielding portion 2222b.

In addition, the magnetic shielding component 2222 of the actuator 222 is fastened to the base 223. In this case, when the actuating device 22 is installed on the electronic device, installation can be completed by directly fastening the base 223 to the electronic device. This can improve installation efficiency of the actuating device 22 in the electronic device, and ensures a more compact structure of the entire actuating device 22.

For example, if one lens 21 is driven, there may be one actuating device 22 in this embodiment. During specific installation, there may be one actuator 222 of the actuating device 22 in this embodiment of this application, the magnetic shielding component 2222 of the actuator 222 is fastened to the base 223, one end of the motor carrier 221 is connected to a coil 2224 of the actuator 222, and the other end of the motor carrier 221 is connected to one end of the lens 21. During specific operation, the power supply apparatus 2223 provides a current to the coil 2224, and the coil 2224 drives the motor carrier 221 to move parallel to the extension direction of the third magnetic shielding portion 2222b, to drive the lens 21 to move in the specified direction and implement the long range zooming of the lens 21.

In some examples, there may be two actuating devices 22. For example, one actuating device 22 may be separately disposed on two ends of the axis *l* of the lens 21, and a motor carrier 221 of each actuating device 22 is connected to a side wall on one end of the axis *l* of the lens 21. During operation, actuators 222 of the actuating devices 22 on the two ends of the axis *l* of the lens 21 respectively drive corresponding motor carriers 221 to move, to implement stable drive of the lens 21 by synchronously driving side walls at the two ends of the axis *l* of the lens 21. It may be understood that, in this example, the motor carrier 221 in the actuating device 22 may be connected to only a side of the lens 21, and the two actuating devices 22 are configured to simultaneously drive the two ends of the axis *l* of the lens 21.

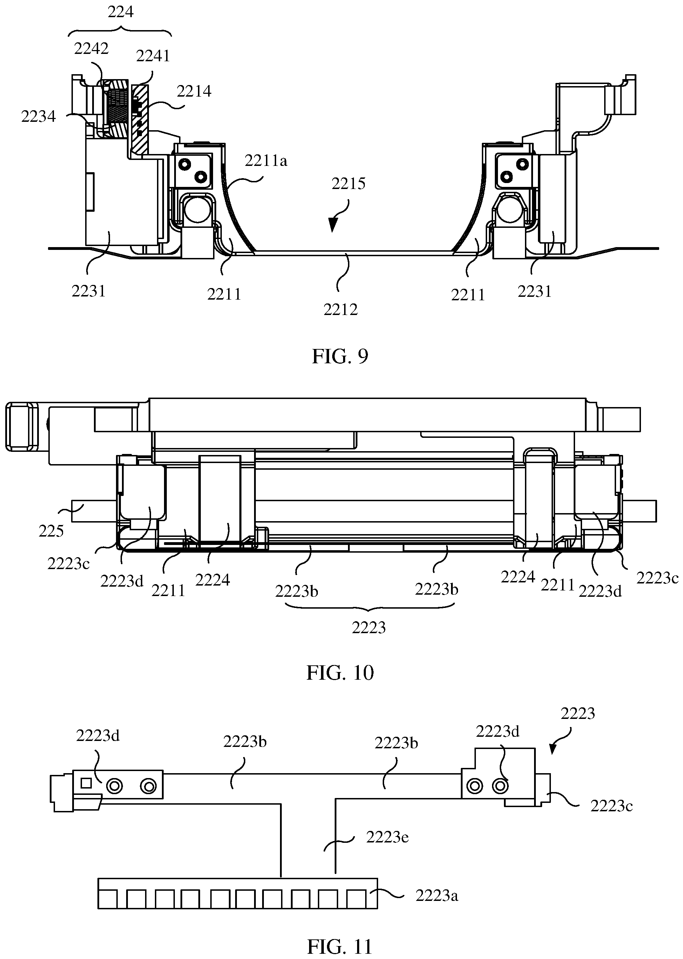

FIG. 9 is a sectional view along a line C-C in FIG. 7. Refer to FIG. 8 and FIG. 9. In a possible implementation, the motor carrier 221 may include two oppositely disposed carriers 2211. An installation position 2215 of the lens 21 is arranged between the two carriers 2211. Side walls at the two ends of the axis *l* of the lens 21 are respectively connected to a corresponding carrier 2211.

In an actual application, lens connection portions 211 extend from the side walls at the two ends of the axis *l* of the lens 21, and the two carriers 2211 are respectively connected to corresponding lens connection portions 211. In this embodiment, there are at least two actuators 222, and the at least two actuators 222 are respectively connected to two opposite carriers 2211, so as to drive the two carriers 2211 to move, to drive the lens 21 to move. A lens body portion 212 of the lens 21 and the lens connection portions 211 located on the two ends of the axis *l* of the lens 21 are usually integrally formed, to improve structural strength of the lens 21.

As shown in FIG. 7 to FIG. 9, the motor carrier 221 in this embodiment further includes a holding portion 2212. Two ends of the holding portion 2212 are respectively connected to two opposite carriers 2211, and a bottom of the lens 21 is supported on the holding portion 2212, to improve stability of the lens 21 on the motor carrier 221.

Refer to FIG. 7. To fasten actuators 222 corresponding to the two carriers 2211, the base 223 in this embodiment may include two oppositely disposed sub-bases 2231. Actuators 222 that are of the two carriers 2211 and that drive the motor carrier 221 are respectively fastened to corresponding sub-bases 2231. The motor carrier 221 is located between the two sub-bases 2231, to ensure a more compact structure of the entire actuating device 22.

During specific installation of the actuating device 22, the two sub-bases 2231 are fastened inside the housing 10 of the electronic device, to implement stable installation between the camera module 20 and the electronic device.

Refer to FIG. 3 and FIG. 7. To further improve structural stability of the base 223, a reinforcement base 2232 may be connected between one end of the two sub-bases 2231. The reinforcement base 2232 is disposed away from a light transmission area 11 on the housing 10. A light avoidance opening 2233 is arranged opposite to the reinforcement base 2232. The light avoidance opening 233 faces toward the light transmission area 11. In this case, a lens 21 inside the base 223 can implement external light transmission with the outside by using the light avoidance opening 233 and the light transmission area 11, to ensure normal shooting of the camera module 20.

The following describes a structure and a working principle of the actuating device 22 in this application by using an example in which one lens 21 is driven.

Refer to FIG. 7 and FIG. 8. To drive the lens 21 to move, there are two actuators 222 in this embodiment. Magnetic shielding components 2222 of the two actuators 222 are respectively connected to corresponding sub-bases 2231. Coils 2224 are respectively connected to corresponding carriers 2211. The two lens connection portions 211 of the lens 21 are respectively connected to corresponding carriers 2211.

During operation, a power supply apparatus 2223 of each actuator 222 supplies power to a corresponding coil 2224, and the energized coil 2224 drives, under the action of the magnetic field, the carrier 2211 to move parallel to the extension direction of the third magnetic shielding portion 2222b. This can implement stable drive of the lens 21 between the two carriers 2211, and improve reliability of long range zooming of the lens 21 implemented by the actuating device 22.

In this embodiment, the two carriers 2211 of the motor carrier 221 are respectively connected to the lens connection portions 211 on the two ends of the axis *l* of the lens 21, so that the lens 21 is stably fastened to the motor carrier 221, to ensure that the lens 21 and the motor carrier 21 move synchronously.

In this embodiment, when the carrier 2211 of the motor carrier 221 is connected to the coil 2224, one end that is of the carrier 2211 and that is away from the lens 21 may be directly fastened to the coil 2224. In this case, when moving along the third magnetic shielding portion 2222b under the action of the ampere force, the coil 2224 can drive the carrier 2211 to move synchronously.

Refer to FIG. 3 and FIG. 7. In some examples, a holder 2213 may be disposed on a side that is of the carrier 2211 of the motor carrier 221 and that is close to the third magnetic shielding portion 2222b. The holder 2213 is provided with a limiting hole, and the holder 2213 is disposed on the third magnetic shielding portion 2222b, and the coil 2224 sleeved on the third magnetic shielding portion 2222b is clamped into the limiting hole of the holder 2213. In this case, when moving on the third magnetic shielding portion 2222b, the energized coil 2224 can drive, by using the holder 2213, the carrier 2211 to move synchronously. Disposition of the holder 2213 simplifies a connection structure between the carrier 2211 and the coil 2224, so that installation between the carrier 2211 and the coil 2224 is more convenient and quicker.

It may be understood that the width of the limiting hole on the holder 2213 fits the width of the coil 2224, to ensure that the coil 2224 and the holder 2213 move synchronously. The width of the coil 2224 is specifically the width of the coil 2224 in the extension direction of the third magnetic shielding portion 2222b. Similarly, the width of the limiting hole is specifically the width of the limiting hole in the extension direction of the third magnetic shielding portion 2222b.

In an actual application, a side surface of the lens 21 is usually an arc structure. To help install the lens 21 between two opposite carriers 2211 of the motor carrier 221, at least a part of a side surface that is of each carrier 2211 and that faces toward a side wall of the lens 21 may be configured as an arc-shaped surface 2211a that fits a side wall shape of the lens 21, as shown in FIG. 4 and FIG. 8. The side surface that is of the carrier 2211 and that faces toward the side wall of the lens 21 is configured as the arc-shaped surface 2211a that fits the side wall shape of the lens 21, so that a degree of fit between the side wall of the lens 21 and the side wall of the carrier 2211 is improved. This can reduce an installation gap between the lens 21 and the motor carrier 221, so that the installed actuating device 22 is more compact. In addition, the foregoing disposition also avoids damage to the lens 21 caused by a side wall that is of the carrier 2211 and that faces toward the lens 21 when the lens 21 is installed on the motor carrier 221.

Refer to FIG. 7. To ensure that the coil 2224 drives the carrier 2211 of the motor carrier 221 to stably move along a straight line, two first guide rails 225 are disposed side by side on the base 223 in this embodiment. Each first guide rail 225 is fastened to a corresponding sub-base 2231, and a carrier 2211 located on each sub-base 2231 is movably sleeved on a corresponding first guide rail 225, so that the coil 2224 can drive each carrier 2211 to move along the first guide rail 225, to ensure that each carrier 2211 moves along the straight line.

In addition, the first guide rail 225 also stably supports the carrier 2211. It may be understood that an extension direction of each first guide rail 225 is parallel to the extension direction of the third magnetic shielding portion 2222b, to ensure that a movement direction of the carrier 2211 on the first guide rail 225 is consistent with a movement direction of the coil 2224.

Refer to FIG. 8. In an actual application, the camera module 20 further includes two second guide rails 24 disposed side by side, and the two second guide rails 24 are correspondingly disposed on sides that are of the two first guide rails 225 and that are away from a bottom of the base 223. The second guide rails 24 are disposed parallel to the first guide rail 225, and the two lens connection portions 211 of the lens 21 are respectively sleeved on corresponding second guide rails 24, so that the carrier 2211 can drive each lens connection portion 211 to move along a corresponding second guide rail 24, to ensure that the lens 21 stably moves along the axis *l*.

Refer to FIG. 8. Due to a manufacturing tolerance, a parallelism tolerance between the first guide rail 225 and the second guide rail 24 that are vertically disposed exists. In this embodiment, to absorb the parallelism tolerance, a buffer 226 is disposed between each carrier 2211 and the lens connection portion 211. The parallelism tolerance between the first guide rail 225 and the second guide rail 24 is absorbed through elastic deformation of the buffer 226, so that the carrier 2211 and the lens 21 are not stuck due to close contact in a moving process, and the lens 21 and the motor carrier 221 decouple from each other.

The buffer 226 may be a spring plate disposed on a side that is of each carrier 2211 and that faces toward the lens connection portion 211, to simplify a structure of the buffer 226 and improve installation efficiency of the actuating device 22.

When the carrier 2211 is specifically connected to the lens connection portion 211, an adhesive may be separately disposed on two sides of the buffer 226, for example, the spring plate, to bond the carrier 2211 to the lens connection portion 211. This can implement a stable connection between the carrier 2211 and the lens connection portion 211.

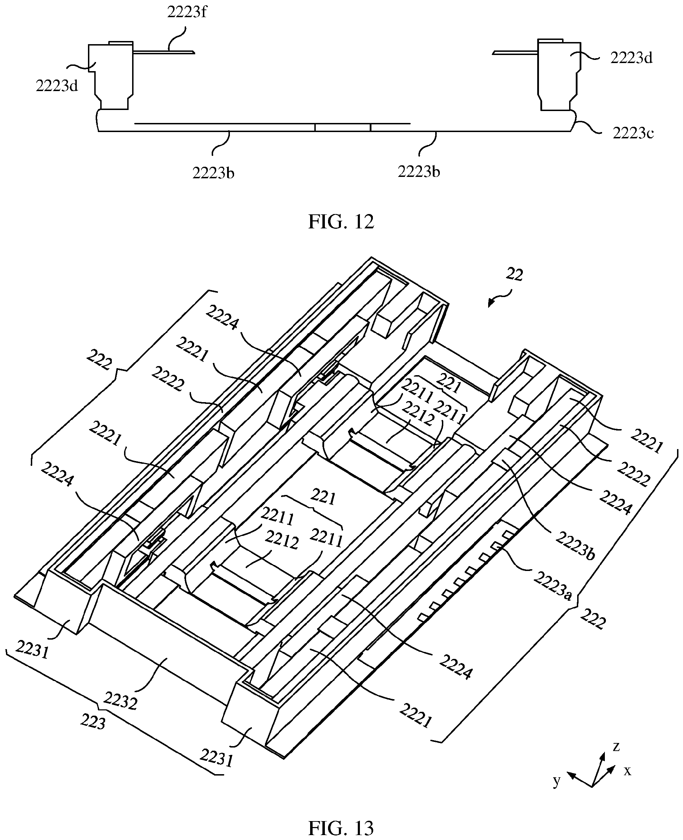

FIG. 10 is a partial schematic diagram of an internal structure in FIG. 3. FIG. 11 is a top view of a power supply apparatus in FIG. 10. FIG. 12 is a main view of a power supply apparatus in FIG. 10. Refer to FIG. 10 to FIG. 12. During operation of the actuating device 22 in this embodiment, a coil 2224 of each actuator 222 continuously moves along the third magnetic shielding portion 2222b. To ensure that the power supply apparatus 2223 stably supplies power to the moving coil 2224, in this embodiment, one end of the power supply apparatus 2223 is connected to the motor carrier 221, so that the power supply apparatus 2223 can move with the motor carrier 221, to form a stable and controllable current in the coil 2224 fastened to the motor carrier 221. This produces a stable driving force for the coil 2224, an implement stable driving of the motor carrier 221.

It may be understood that the end of the power supply apparatus 2223 that is connected to the motor carrier 221 is further electrically connected to the coil 2224 on the motor carrier 221, to stably supply power to the coil 2224.

Refer to FIG. 10 and FIG. 11. Specifically, the power supply apparatus 2223 is a flexible printed circuit board. One end of the flexible printed circuit board is electrically connected to the main control board 23 of the camera module 20, and the other end of the flexible printed circuit board is connected to either of the carriers 2211 of the motor carrier 221, and is electrically connected to the coil 2224 connected to the carrier 2211. When driven by the coil 2224 to move along the first guide rail 225, the carrier 2211 drives one end of the flexible printed circuit board to move synchronously with the carrier 2211, so that the main control board 23 provides a stable current to the coil 2224 by using the flexible printed circuit board.

Still refer to FIG. 11. The flexible circuit board may include a fixing portion 2223a and a movable portion 2223b connected to the fixing portion 2223a. The fixing portion 2223a is fastened to the base 223. One end of the movable portion 2223b is connected to either of the carriers 2211 of the motor carrier 221, and at least a part of the movable portion 2223b extends along a moving direction of the carrier 2211. In this way, the carrier 2211 of the motor carrier 221 drives the movable portion 2223b to move stably, to stably supply power to the coil 2224 on the carrier 2211. In addition, the movable portion 2223b is connected to the base 223 by using the fixing portion 2223a, to ensure implements stable transmission of a current between the flexible printed circuit board and the main control board 23, further ensuring a stable current input to the coil 2224.

One end that is of the movable portion 2223b and that is connected to the motor carrier 221 may be configured as an arc section 2223c. The movable portion 2223b is connected to the motor carrier 221 by using the arc structure, to prevent one end that is of the flexible printed circuit board and that is connected to the carrier 2211 from being broken and ensure the stable current input to the coil 2224.

In some examples, one end of the movable portion 2223b may be provided with a reinforcement component 2223d, so that the end of the movable portion 2223b is fastened to the carrier 2211 by using the reinforcement component 2223d. This can improve connection strength between the flexible printed circuit board and the carrier 2211, to improve reliability for the movable portion 2223b of the flexible printed circuit board to move with the carrier 2211. As shown in FIG. 12, an electrical connection terminal 2223f is disposed on the reinforcement component 2223d, and the electrical connection terminal 2223f is electrically connected to the coil 2224 on the carrier 2211, so that the movable portion 2223b is electrically connected to the coil 2224.

When the reinforcement component 2223d is specifically connected to the carrier 2211, the reinforcement component 2223d may be fastened to the carrier 2211 in a detachable manner, such as by using a screw or a fastener.

Still refer to FIG. 11. The flexible printed circuit board in this embodiment may further include a transition portion 2223e, and the fixing portion 2223a is connected to the movable portion 2223b by using the transition portion 2223e, so that the entire movable portion 2223b can extend in a movement direction of the motor carrier 221. For example, the fixing portion 2223a of the flexible printed circuit board is fastened to a corresponding sub-base 2231. One end of the transition portion 2223e is connected to the fixing portion 2223a, and the other end of the transition portion 2223e extends toward the bottom of the carrier 2211 corresponding to the motor carrier 221. One end of the movable portion 2223b is connected to the transition portion 2223e. The other end of the movable portion 2223b extends in the movement direction of the carrier 2211, is connected to the carrier 2211, and is electrically connected to the coil 2224 on the carrier 2211.

Disposition of the transition portion 2223e extends a movement stroke of the movable portion 2223b in a direction parallel to the third magnetic shielding portion 2222b under driving of the carrier 2211 of the motor carrier 221. This can ensure that stability of the fixing portion 2223a is not affected when the carrier 2211 drives the movable portion 2223b to move in the movement direction.

Refer to FIG. 9. To detect a movement position of the motor carrier 221 in real time, the actuating device 22 in this embodiment further includes a position detection apparatus 224. Specifically, the position detection apparatus 224 includes a Hall element 2241 and a magnetic sensing component 2242. The Hall element 2241 is disposed on the motor carrier 221, and the magnetic sensing component 2242 is disposed on the base 223. Both the Hall element 2241 and the power supply apparatus 2223 are in a signal connection to a processor of the camera module 20. The Hall element 2241 is configured to detect magnetic field strength of the magnetic sensing component 2242, and send a signal to the processor when the Hall element 2241 detects that the magnetic field strength of the magnetic sensing component 2242 reaches a preset threshold. The processor controls, based on the signal, the power supply apparatus 2223 to stop supplying power to the coil 2224, to stop driving the motor carrier 221. The magnetic sensing component 2242 may be specifically a magnet.

The position detection apparatus 224 is specifically described below by using an example in which a movement position of either of the carriers 2211 of the motor carrier 221 is detected. The Hall element 2241 is fastened to the carrier 2211, and the magnetic sensing component 2242 is fastened to a sub-base 2231 on which the carrier 2211 is located. In a process in which the carrier 2211 moves along the first guide rail 225 under driving of the coil 2224, the Hall element 2241 always detects the magnetic field strength generated by the magnetic sensing component 2242, and feeds back a value of the magnetic field strength to the processor. The processor calculates a distance between the Hall element 2241 and the magnetic sensing component 2242, to calculate a specific position of the carrier 2211. The Hall element 2241 sends a signal to the processor when the Hall element 2241 detects that the magnetic field strength of the magnetic sensing component 2242 reaches a preset threshold. The processor controls, based on the signal, the power supply apparatus 2223 to stop supplying power to the coil 2224, to stop driving the carrier 2211.

In this embodiment, the Hall element 2241 and the magnetic sensing component 2242 are disposed, to detect and control a movement position of the motor carrier 221, so as to implement closed-loop control of the motor carrier 221. In addition, the Hall element 2241 is fastened to the carrier 2211 of the motor carrier 221, so that the power supply apparatus 2223 connected to the carrier 2211 stably supplies power to the Hall element 2241, ensuring normal operation of the Hall element 2241. For example, one end of the flexible printed circuit board connected to the carrier 2211 may further be directly electrically connected to the Hall element 2241, to stably supply power to the Hall element 2241.

Refer to FIG. 3 and FIG. 9. To ensure that the Hall element 2241 installed on the carrier 2211 can effectively detect the magnetic field strength of the magnetic sensing component 2242, an installation plate 2214 is disposed on the holder 2213 of the carrier 2211 in this embodiment. In addition, an installation base 2234 opposite to the installation plate 2214 is disposed on a corresponding sub-base 2231. The Hall element 2241 is fastened to a side surface that is of the installation plate 2214 and that faces toward the installation base 2234, and the magnetic sensing component 2242 is fastened to a side surface that is of the installation base 2234 and that faces toward the installation plate 2214. This can prevent a case in which a magnetic field signal between the Hall element 2241 and the magnetic sensing component 2242 is weakened due to being blocked by another component, so that accuracy of detecting the magnetic field strength of the magnetic sensing component 2242 by the Hall element 2241 is further improved.

A receiving groove may be provided on a side that is of the installation plate 2214 and that faces toward the installation base 2234, to receive the Hall element 2241 in the receiving groove. In this way, stability of the Hall element 2241 on the installation plate 2214 is improved, and a size occupied by the Hall element 2241 outside the installation plate 2214 is reduced. Similarly, a receiving groove may be provided on a side that is of the installation base 2234 and that faces toward the installation plate 2214, to receive the magnetic sensing component 2242 in the receiving groove. In this way, stability of the magnetic sensing component 2242 on the installation base 2234 is improved, a size occupied by the magnetic sensing component 2242 outside the installation base 2234 is reduced, and structural compactness of the actuating device 22 is further improved.

Refer to FIG. 2. In an actual application, the camera module 20 includes a plurality of coaxial lenses 21 that are sequentially spaced from each other, in other words, the plurality of lenses 21 are spaced from each other in a direction of axes (the extension direction of the third magnetic shielding portion 2222b). To implement long-stroke movement of the plurality of lenses 21, a plurality of motor carriers 221 in this embodiment may be sequentially spaced from each other in the extension direction of the third magnetic shielding portion 2222b. As shown in FIG. 3 and FIG. 7, each motor carrier 221 is connected to the corresponding lens 21, so that the actuating device 22 stably drives the plurality of lenses 21 simultaneously.

To drive the plurality of motor carriers 221, there may be a plurality of coils 2224 in the actuator 222 in this embodiment of this application, and the plurality of coils 2224 are sleeved on the third magnetic shielding portion 2222b and spaced from each other. One end of each motor carrier 221 is connected to a corresponding coil 2224. In this case, any energized coil 2224 can drive, under the action of the magnetic field, a corresponding motor carrier 221 to move.

For example, as shown in FIG. 5 and FIG. 7, two coils 2224 are sleeved on the third magnetic shielding portion 2222b of the actuator 222, and the two coils 2224 are respectively connected to two corresponding motor carriers 221. When power is supplied to the two coils 2224, an Ampere force parallel to the extension direction of the third magnetic shielding portion 2222b (as indicated by an x direction in FIG. 7) is generated in each of the two coils 2224 under the action of the magnetic field. In this case, each coil 2224 moves in the x direction, to drive the two motor carriers 221 to move in the x direction.

In an actual application, a corresponding coil 2224 may be energized based on an actual requirement, to drive a corresponding motor carrier 221 to move, so as to drive a corresponding lens 21.

In embodiments of this application, the plurality of coils 2224 are sleeved on the third magnetic shielding portion 2222b and spaced from each other. A quantity of actuators 222 and a quantity of components and parts of the entire actuating device 22 are reduced while driving of the plurality of motor carriers 221 that are spaced from each other is implemented. Therefore, the entire structure is simpler and more compact, and manufacturing and installation efficiency of the actuating device 22 is improved.

For example, the motor carrier 221 includes two opposite carriers 2211. Two opposite carriers 2211 of each motor carrier 221 drive each lens 21, so that the actuating device 22 having the plurality of motor carriers 221 stably drives a plurality of lenses 21.

To simplify a structure of the actuating device 22, in some examples, there may be two actuators 222. The two actuators 222 are respectively disposed on a side of the two opposite carriers 2211 of the motor carrier 221.

A magnetic shielding component 2222 of each actuator 222 is connected to the base 223, and is specifically connected to a sub-base 2231 corresponding to the carrier 2211. A plurality of coils 2224 are sleeved on the third magnetic shielding portion 2222b of each actuator 222 and spaced from each other. In the plurality of motor carriers 221, each carrier 2211 on a same side is connected to a corresponding coil 2224, so that each energized coil 2224 drives a corresponding carrier 2211 on the motor carrier 221, to implement long range zooming of the plurality of lenses 21.

A quantity of coils 2224 on the third magnetic shielding portion 2222b may be equal to a quantity of motor carriers 221, so that the coils are disposed in correspondence with the carriers 2211 on the same side. Alternatively, a quantity of coils 2224 on the third magnetic shielding portion 2222b may be greater than a quantity of motor carriers 221. Redundant coils 2224 are reserved.

For example, the camera module 20 has two coaxial lenses 21. The actuating device 22 in this embodiment includes two motor carriers 221 that are spaced from each other along the axis *l* of the lenses 21. One actuator 222 is disposed on each sub-base 2231. The magnetic shielding component 2222 of each actuator 222 is connected to the sub-base 2231. Two coils 2224 are sleeved on the third magnetic shielding portion 2222b, and each coil 2224 is respectively connected to the carriers 2211 on the same side of the two motor carriers 221. During operation, the power supply apparatus 2223 of each actuator 222 supplies power to the two coils 2224 on the third magnetic shielding portion 2222b, and the two energized coils 2224 respectively drive the two carriers 2211 on the same side to move in a corresponding first guide rail 225, to implement long range zooming of the two lenses 21

It may be understood that, when only one lens 21 needs to be moved, power may be supplied to only two coils 2224 that drive the lens 21 to move, so that the carriers 2211 connected to two ends of the lens 21 move along two first guide rails 225 under driving of corresponding coils 2224.

Refer to FIG. 10 and FIG. 11. To enable the power supply apparatus 2223 of each actuator 222 to simultaneously supply stable power to two coils 2224 on the same side, there may be two movable portions 2223b in the power supply apparatus 2223. Ends that are of the two movable portions 2223b and that are away from the transition portion 2223e respectively extend in a movement direction of a corresponding carrier 2211 and are respectively connected to the corresponding carrier 2211. In this case, when moving, the two carriers 2211 on the same side can drive a corresponding movable portion 2223b to move, to supply stable power to the coil 2224 on each carrier 2211.

It should be understood that a quantity of movable portions 2223b of each power supply apparatus 2223 corresponds to a quantity of motor carriers 221, so that the movable portions 2223b of each power supply apparatus 2223 can be correspondingly connected to carriers 2211 on the same side.

In this embodiment, the plurality of coils 2224 are sleeved on the third magnetic shielding portion 2222b of the actuator 222, to simultaneously drive a plurality of carriers 2211 on the same side. A quantity of actuators 222 and a quantity of components and parts of the entire actuating device 22 are reduced while driving of the plurality of motor carriers 221 that are spaced from each other is implemented. Therefore, the entire structure is simpler and more compact, and manufacturing and installation efficiency of the actuating device 22 is improved.

### Embodiment 2

FIG. 13 is a schematic diagram of a second structure of an actuating device in FIG. 2. FIG. 14 is a schematic diagram of a partial split structure of an actuating device in FIG. 13. Refer to FIG. 13 and FIG. 14. Different from Embodiment 1, in the actuator 222 in this embodiment of this application, the magnetic shielding component 2222 and the at least one actuating magnetic component 2221 are fixedly connected to the base 223.

The base 223 includes at least one side wall, and the magnetic shielding component 2222 is at least partially fastened to the side wall of the base 223. For example, as shown in FIG. 14, the base 223 includes two opposite side walls. The first magnetic shielding portion 2222a in the magnetic shielding component 2222 may be located on one side of an inner surface of a side wall of the base 223, and the first magnetic shielding portion 2222a may be fastened to the inner surface of the side wall of the base 223. The at least one actuating magnetic component 2221 may be fastened to the first magnetic shielding portion 2222a.

Both the actuating magnetic component 2221 and the coil 2224 are located in the installation space enclosed by the first magnetic shielding portion 2222a and the two second magnetic shielding portions 2222c. The actuating magnetic component 2221 is fastened to the first magnetic shielding portion 2222a. There may be plurality of actuating magnetic component 2221. In FIG. 13, there are two actuating magnetic components 2221 in each actuator 222, one coil 2224 is disposed on one side of each actuating magnetic component 2221, and one end of each motor carrier 221 is connected to one coil 2224.

As shown in FIG. 14, the actuating magnetic component 2221 includes a first part 2221a and a second part 2221b that are disposed in an extension direction. The first part 2221a and the second part 2221b have opposite magnetism. The coil 2224 is located on a side that is of the actuating magnetic component 2221 and that is away from the first magnetic shielding portion 2222a. An axis direction of the coil 2224 is perpendicular to an extension direction of the actuating magnetic component 2221, a part of the coil 2224 is located on a side of the first part 2221a, and the other part of the coil 2224 is located on a side of the second part 2221b.

As shown in FIG. 14, the fixing portion 2223a in the power supply apparatus 2223 is fastened to the base 223. A difference between the power supply apparatus 2223 and the foregoing embodiment is as follows: In this embodiment of this application, the movable portion 2223b of the power supply apparatus 2223 may be an elastomer, one end of the movable portion 2223b is electrically connected to the carrier 2211 of the motor carrier 221 or the coil 2224, and the other end of the movable portion 2223b bypasses the actuating magnetic component 2221 and is electrically connected to the fixing portion 2223a. In this case, when the carrier 2211 of the motor carrier 221 moves, because the movable portion 2223b is elastic, the carrier 2211 drives one end of the movable portion 2223b to move stably, and one end of the movable portion 2223b is fixed. This can supply mobile power to the carrier 2211.

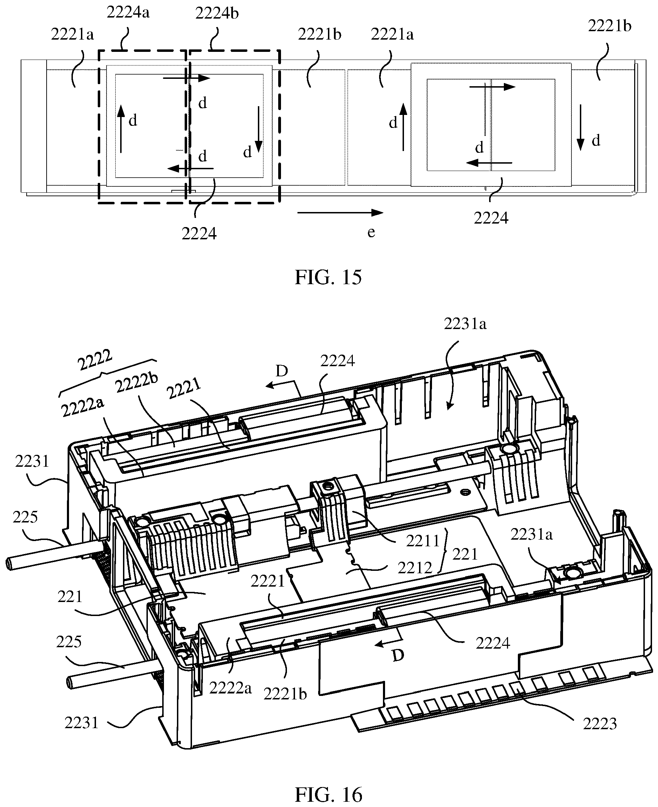

FIG. 15 is a main view of FIG. 14. Refer to FIG. 15. Under the action of the magnetic field, the energized coil 2224 moves in the extension direction (a direction indicated by an arrow e in FIG. 15) of the actuating magnetic component 2221 relative to the first magnetic shielding portion 2222a. The extension direction of the actuating magnetic component 2221 is consistent with the specified direction. In this case, in a moving process, the coil 2224 drives the motor carrier 221 to move on the path parallel to the specified direction. This can implement stable movement of the lens 21 connected to the motor carrier 221 and a long range zooming function.

It should be noted that the axis direction of the coil 2224 is a direction indicated by a principal axis of annular space formed by the coil 2224.

Refer to FIG. 15. For ease of description, the coil 2224 in this embodiment of this application may include a left half part 2224a and a right half part 2224b that are successively disposed in the extension direction of the actuating magnetic component 2221. The left half part 2224a and the right half part 2224b are respectively located on a side of the first part 2221a and the second part 2221b of the actuating magnetic component 2221.

The first part 2221a and the second part 2221b have opposite magnetism, currents of the left half part 2224a and the right half part 2224b of the energized coil 2224 are in opposite directions, and current directions are perpendicular to the magnetic induction line acting on the coil 2224 by the actuating magnetic component 2221. Therefore, after the coil 2224 is energized, an ampere forces acting on the left half part 2224a and the right half part 2224b of the coil 2224 have components in a same direction in the extension direction of the actuating magnetic component 2221, so that the coil 2224 can move in the extension direction of the actuating magnetic component 2221.

For example, the coil 2224 is a rectangular annular coil, the first part 2221a of the actuating magnetic component 2221 is an N pole, and the second part 2221b is an S pole. The left half part 2224a of the coil 2224 is located on a side of the first part 2221a, the right half part 2224b of the coil 2224 is located on a side of the second part 2221b. Both the left half part 2224a and the right half part 2224b of the coil 2224 include a vertical part and a horizontal part. The vertical part is perpendicular to the extension direction of the actuating magnetic component 2221, and the horizontal part is parallel to the extension direction of the actuating magnetic component 2221.

The magnetic induction line generated by the actuating magnetic component 2221 passes from the first part 2221a through the coil 2224 to the second part 2221b. In this case, a magnetic induction line to which the left half part 2224a of the coil 2224 is exposed is perpendicular to the left half part 2224a of the coil 2224, and points from a side facing toward the actuating magnetic component 2221 to a side away from the actuating magnetic component 2221 (in other words, from inward to paper to outward). A magnetic induction line to which the right half part 2224b of the coil 2224 is exposed is perpendicular to the right part of the coil 2224, and points from the side away from the actuating magnetic component 2221 to the side facing toward the actuating magnetic component 2221 (in other words, from outward to inward to paper).

When the power supply apparatus 2223 provides a current in a clockwise direction, in other words, a direction indicated by an arrow d, to the coil 2224, a current on the vertical part of the left half part 2224a of the coil 2224 points upward. According to the left-hand rule, it can be learned that: An Ampere force acting on the vertical part of the left half part 2224a is parallel to the extension direction of the actuating magnetic component 2221, and points to the right, in other words, a direction indicated by an arrow e. An upper horizontal part and a lower horizontal part of the left half part 2224a carry currents in opposite directions and are subject to magnetic fields in a same direction, and then ampere forces on the upper and lower parts counteract each other.

A current on the vertical part of the right half part 2224b of the coil 2224 points downward. According to the left-hand rule, it can be learned that: An Ampere force acting on the vertical part of the right half part 2224b is parallel to the extension direction of the actuating magnetic component 2221, and points to the right, in other words, a direction indicated by an arrow e. An upper horizontal part and a lower horizontal part of the right half part 2224b carry currents in opposite directions and are subject to magnetic fields in a same direction, and then ampere forces on the upper and lower parts counteract each other.

Based on the foregoing analysis, it can be learned that the entire coil 2224 is subject to the Ampere force parallel to the extension direction of the actuating magnetic component 2221, and the Ampere force points to the right, in other words, the direction indicated by the arrow e. It may be understood that, when the power supply apparatus 2223 provides a current in a counterclockwise direction to the coil 2224, the entire coil 2224 is subject to the Ampere force parallel to the extension direction of the actuating magnetic component 2221, and the Ampere force points to the left, in other words, an opposite direction of the direction indicated by the arrow e.

As shown in FIG. 13, the magnetic shielding component 2222 is connected to the camera module 20 or a stationary component, such as the base 223, in the mobile phone. For example, the first magnetic shielding portion 2222a of the magnetic shielding component 2222 is fastened to the base 223, to ensure that the magnetic shielding component 2222 is fixed and the coil 2224 is connected to the motor carrier 221. In this case, the energized coil 2224 moves in the extension direction (a direction indicated by the arrow x in FIG. 13) of the actuating magnetic component 2221 under the action of the magnetic field of the actuating magnetic component 2221, to drive the motor carrier 221 to move in the x direction. This can implement stable movement of the lens 21 connected to the motor carrier 221 and a long range zooming function.

In embodiments of this application, the two parts of the actuating magnetic component 2221 that are disposed in the extension direction have opposite magnetism. Two parts of the coil 2224 that are disposed in the extension direction of the actuating magnetic component 2221 are respectively disposed on a side of the first part 2221a and the second part 2221b. In this case, when power is supplied to the coil 2224, the coil 2224 moves in the extension direction of the actuating magnetic component 2221 under the action of the magnetic field. This can ensure that the motor carrier 221 connected to the coil 2224 to move in a specified direction, to drive the lens 21.

In embodiments of this application, the motor carrier can change the movement stroke of the motor carrier 221 by adjusting extended lengths of the first part 2221a and the second part 2221b of the actuating magnetic component 2221. This ensures a simple structure and convenient installation and operation.

Refer to FIG. 14. In some examples, the magnetic shielding component 2222 may further include a fourth magnetic shielding portion 2222d. Two ends of the fourth magnetic shielding portion 2222d in an extension direction are respectively connected to the two second magnetic shielding portion 2222c. The first magnetic shielding portion 2222a is connected to a side of the fourth magnetic shielding portion 2222d. For example, the fourth magnetic shielding portion 2222d includes two side edges disposed opposite to each other in a width direction, and the first magnetic shielding portion 2222a is connected to either of the side edges. The first magnetic shielding portion 2222a, the two second magnetic shielding portions 2222c, and the fourth magnetic shielding portion 2222d jointly enclose the installation space of the magnetic shielding component 2222. Both the coil 2224 and the actuating magnetic component 2221 are disposed on the fourth magnetic shielding portion 2222d.

In this embodiment of this application, disposition of the fourth magnetic shielding portion 2222d further isolates the magnetic field, and improves structural stability of the actuating magnetic component 2221 and the coil 2224 in the actuating device 22.

Refer to FIG. 13. Different from Embodiment 1, when the actuating device 22 includes a plurality of motor carriers 221 that are spaced from each other in the extension direction (for example, a direction indicated by x) of the actuating magnetic component 2221, to drive the plurality of motor carriers 221, the actuator 222 in this embodiment of this application includes a plurality of actuating magnetic components 2221. The plurality of actuating magnetic components 2221 are successively disposed in the extension direction of the first magnetic shielding portion 2222a, one coil 2224 is disposed on one side of each actuating magnetic component 2221, and one end of each motor carrier 221 is connected to a corresponding coil 2224. In this case, any energized coil 2224 can drive, under the action of the magnetic field, a corresponding motor carrier 221 to move.

Refer to FIG. 13. Two motor carriers 221 are used as an example. To drive a plurality of motor carriers 221, the actuator 222 in this embodiment of this application includes two actuating magnetic components 2221. The two actuating magnetic components 2221 are successively disposed in the extension direction (for example, the direction indicated by x) of the first magnetic shielding portion 2222a, one coil 2224 is disposed on one side of each actuating magnetic component 2221, and one end of each motor carrier 221 is connected to a corresponding coil 2224. In this case, any energized coil 2224 can drive, under the action of a magnetic field, a corresponding motor carrier 221 to move, so that the lens 21 connected to the motor carrier 221 moves.

Two adjacent actuating magnetic components 2221 may be in contact with each other, to reduce a size occupied by the actuator 222 in the actuating device 22.

### Embodiment 3

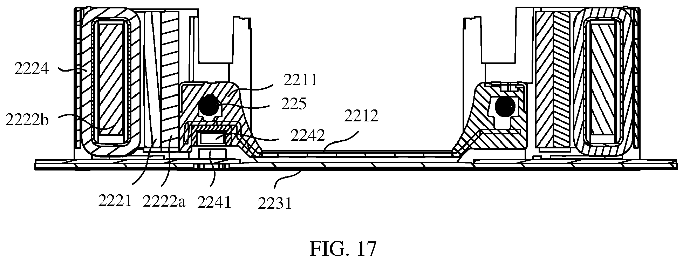

FIG. 16 is a schematic diagram of a third structure of an actuating device in FIG. 2. FIG. 17 is a sectional view of a part along a line D-D in FIG. 16. Refer to FIG. 16 and FIG. 17. Different from the actuating device 22 of the first and second structures, in the actuating device 22 of the third structure provided in this embodiment, the coil 2224 of the actuator 222 is connected to the camera module 20 or a stationary component in the electronic device. For example, the coil 2224 of the actuator 222 is connected to the base 223, one end of the third magnetic shielding portion 2222b penetrates the coil 2224, and the third actuating magnetic component 2221 is disposed on the first magnetic shielding portion 2222a. As shown in FIG. 16, the actuating magnetic component 2221 and the motor carrier 221 are respectively located on two sides of the first magnetic shielding portion 2222a. The actuating magnetic component 2221 is disposed, for example, on a side wall facing outward of the first magnetic shielding portion 2222a. The actuating magnetic component 2221 is opposite to the third magnetic shielding portion 2222b. The first magnetic shielding portion 2222a is connected to the motor carrier 221. In this embodiment of this application, the motor carrier 221 is connected to the actuating magnetic component 2221 by using the first magnetic shielding portion 2222a.

In this embodiment of this application, the coil 2224 is fixed. After the coil 2224 is energized, the actuating magnetic component 2221, the first magnetic shielding portion 2222a, and the third magnetic shielding portion 2222b move together, and drive the motor carrier 221 to move. Therefore, the base 223 is provided with an avoidance passage 2231a for the magnetic shielding component 2222 to move.

Consistent with the actuator 222 in Embodiment 1 or Embodiment 2, the Ampere force parallel to the first magnetic shielding portion 2222a is generated after an end that is of the energized coil 2224 and that is close to the actuating magnetic component 2221 is exposed to a perpendicular magnetic field. Because the coil 2224 is fastened to the base 223, according to the principle of action and reaction forces, the magnetic shielding component 2222 passes through the coil 2224 to reciprocate, to drive the motor carrier 221 connected to the first magnetic shielding portion 2222a to move along a path parallel to the extension direction of the first magnetic shielding portion 2222a. In this case, long range zooming of the lens 21 fastened to the motor carrier 221 is further implemented.

Refer to FIG. 16. When the motor carrier 221 includes the two opposite carriers 2211, the coil 2224 configured to drive an actuator 222 of each carrier 2211 is connected to a corresponding sub-base 2231. For example, one end that is of the coil 2224 and that is away from the actuating magnetic component 2221 may be connected to the sub-base 2231, so that the coil 2224 is fixed. In addition, the avoidance passage 2231a is provided on the sub-base 2231. The avoidance passage 2231a extends in the direction of the first magnetic shielding portion 2222a, so that the magnetic shielding component 2222 passes through the coil 2224 and moves in the avoidance passage 2231a under the action of the ampere force, to drive each carrier 2211.

Because the coil 2224 is fastened to the sub-base 2231 and does not move with the motor carrier 221, the power supply apparatus 2223 that supplies power to the coil 2224 is connected to the sub-base 2231, to provide a stable current to the coil 2224 on the sub-base 2231.

In addition, the power supply apparatus 2223 is connected to the sub-base 2231 of the base 223, to simplify a structure of each carrier 2211. This improves installation efficiency of the actuating device 22, and reduces a load of the motor carrier 221, so that the magnetic shielding component 2222 can effectively drive the motor carrier 221 to move.

As shown in FIG. 17, the Hall element 2241 of the position detection apparatus 224 in this example is installed on the base 223, and the magnetic sensing component 2242 is installed on the motor carrier 221. Specifically, to detect a movement position of each carrier 2211 on the motor carrier 221, a magnetic sensing component 2242 may be installed on each carrier 2211. For example, an inwardly directed installation slot may be provided at a bottom of the carrier 2211. The magnetic sensing component 2242 is received in the installation slot. This improves stability of the magnetic sensing component 2242 on the carrier 2211, and reduces space in a vertical direction occupied by the magnetic sensing component 2242 in the actuating device 22, ensuring a more compact structure of the actuating device 22.

In addition, a Hall element 2241 corresponding to the magnetic sensing component 2242 is installed on the sub-base 2231. In a process in which the carrier 2211 moves along the first guide rail 225 under driving of the magnetic shielding component 2222, the Hall element 2241 always detects the magnetic field strength generated by the magnetic sensing component 2242, and feeds back a value of the magnetic field strength to the processor. The processor calculates a distance between the Hall element 2241 and the magnetic sensing component 2242, to calculate a specific position of the carrier 2211. The Hall element 2241 sends a signal to the processor when the Hall element 2241 detects that the magnetic field strength of the magnetic sensing component 2242 reaches a preset threshold. The processor controls, based on the signal, the power supply apparatus 2223 to stop supplying power to the coil 2224, to stop driving the carrier 2211, so as to implement closed-loop control of the motor carrier 221.

In addition, the Hall element 2241 is installed on the sub-base 2231 on the base 223, so that the power supply apparatus 2223 fastened to the sub-base 2231 stably supplies power to the Hall element 2241. In addition, both the Hall element 2241 and the power supply apparatus 2223 are disposed on the base 223, so that an installation structure of the motor carrier 221 is further simplified, and a structure of the entire actuating device 22 is more reasonable and compact.

Refer to FIG. 16. When there are a plurality of motor carriers 221 in the actuating device 22 in this embodiment, a plurality of carriers 2211 on a same side are all driven by one actuator 222. For example, the plurality of carriers on the same side are all connected to the first magnetic shielding portion 2222a of the magnetic shielding component 2222 located on this side. In this case, when the magnetic shielding component 2222 of the actuator 222 passes through the coil 2224 and moves in the avoidance passage 2231a, the magnetic shielding component 2222 of the actuator 222 can simultaneously drive the plurality of carriers 2211 on the same side, to implement synchronous drive of the lenses 21 on the plurality of motor carriers 221.

Each carrier 2211 and the first magnetic shielding portion 2222a can be connected in a plurality of manners. For example, a fastener may be disposed at one end that is of the carrier 2211 and that is close to the first magnetic shielding portion 2222a, to implement a stable connection between the first magnetic shielding portion 2222a and the carrier 2211. For another example, each carrier 2211 may be connected to the first magnetic shielding portion 2222a by using a screw. This can ensure connection strength between the carrier 2211 and the first magnetic shielding portion 2222a, and help replace the motor carrier 221 and the actuator 222 separately.

A connection manner between the carrier 2211 and the first magnetic shielding portion 2222a is not specifically limited in this example, provided that the first magnetic shielding portion 2222a can drive the carrier 2211 to move synchronously when moving.

An embodiment of this application further provides a camera module 20, including at least one lens 21 and the actuating device 22 of any one of the foregoing structures. An actuator 222 of the actuating device 22 is connected to the lens 21 by using a motor carrier 221, to drive the lens 21 to move in a specified direction (for example, parallel to an extension direction of a first magnetic shielding portion 2222a of the actuator 222).

In this embodiment of this application, the actuating device 22 is disposed in the camera module 20 to drive the lens 21 to move on a path parallel to a specified direction, to implement a long range zooming process of the lens 21. With a simple structure, the actuating device 22 effectively reduces manufacturing and installation difficulties of the entire camera module 20. In addition, each component is at lower costs than a stepper motor, reducing manufacturing costs of the entire camera module 20.

It should be noted that the actuator 222 in the actuating device 22 shown in FIG. 16 and FIG. 17 is the structure in Embodiment 1. However, in this embodiment, the actuator 222 of the actuating device 22 is the structure described in Embodiment 2 and Embodiment 1 and an installation manner between the actuator 222, the motor carrier 221, and the base 223 is consistent with that described in Embodiment 2 and Embodiment 1. Therefore, when the actuator 222 of the actuating device 22 is the structure described in Embodiment 2, for the installation manner between the actuator 222, the motor carrier 221, and the base 223, directly refer to the foregoing content. Details are not described herein again.

An embodiment of this application provides an electronic device, including a housing 10 and the camera module 20, where the camera module 20 is disposed on the housing 10. The housing 10 may be a rear cover of the electronic device. When the electronic device is an intelligent terminal such as a mobile phone, the camera module 20 may be a rear facing camera module, or the camera module 20 may be a front facing camera module.

The camera module 20 is disposed in the electronic device, to implement long range zooming of the camera module 20 of the electronic device, and ensure functions of long range shooting with a long focal length and wide-angle shooting with a short focal length of the electronic device. This simplifies a structure of the electronic device, and reduces manufacturing and installation difficulties. In addition, each component is at lower costs than a stepper motor, reducing manufacturing costs of the entire electronic device.

It should be noted that the electronic device includes but is not limited to an electronic device having a camera module, such as a mobile phone, a tablet, a notebook computer, a handheld computer, a personal digital assistant (personal digital assistant, PDA), a wearable device, or a virtual reality device.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For a person of ordinary skill in the art, specific meanings of the foregoing terms in embodiments of this application may be understood according to a specific situation.

In the specification, claims, and accompanying drawings of embodiments of this application, the terms "first", "second", "third", "fourth", and so on (if existent) are intended to distinguish between similar objects but do not necessarily indicate a specific order or sequence.

## Claims

1. An actuating device, configured to drive a lens of a camera module to move, wherein the actuating device comprises:
at least one motor carrier and at least one actuator, wherein each motor carrier is configured to carry one lens, and is driven by one or more corresponding actuators of the at least one actuator; and
each actuator comprises at least one actuating magnetic component, a power supply apparatus, and at least one coil, wherein the power supply apparatus is electrically connected to each coil, each motor carrier is connected to the at least one coil or the at least one actuating magnetic component, and the at least one coil and the at least one actuating magnetic component are configured to jointly drive one of the at least one motor carrier to move when the at least one coil is energized.

2. The actuating device according to claim 1, wherein each actuator further comprises a magnetic shielding component, and the magnetic shielding component comprises a first magnetic shielding portion and two second magnetic shielding portions, wherein
the two second magnetic shielding portions are oppositely disposed at two ends of the first magnetic shielding portion, the first magnetic shielding portion and the two second magnetic shielding portion enclose installation space, the actuating magnetic component is located in the installation space, the actuating magnetic component is fastened to the first magnetic shielding portion, and each motor carrier is connected to the at least one coil or the first magnetic shielding portion.

3. The actuating device according to claim 2, wherein the magnetic shielding component further comprises a third magnetic shielding portion, wherein
the third magnetic shielding portion and the first magnetic shielding portion are spaced from each other and disposed in parallel, and two ends of the third magnetic shielding portion are connected to the two second magnetic shielding portions; and
two ends of the actuating magnetic component separately extend to the two second magnetic shielding portions, and the coil is movably sleeved on the third magnetic shielding portion, and the energized coil moves, under an action of a magnetic field, relative to the first magnetic shielding portion in an extension direction of the third magnetic shielding portion.

4. The actuating device according to claim 2 or 3, wherein the actuating device further comprises a base; and
the at least one motor carrier, the at least one actuator, and the at least one lens are all disposed on the base.

5. The actuating device according to claim 4, wherein each motor carrier is connected to the at least one coil of the one or more corresponding actuators, and the at least one actuating magnetic component is fixedly connected to the base.

6. The actuating device according to claim 4, wherein each motor carrier is connected to the at least one coil of the one or more corresponding actuators, and the magnetic shielding component and the at least one actuating magnetic component are fixedly connected to the base.

7. The actuating device according to claim 5 or 6, wherein the base comprises at least one side wall, and the magnetic shielding component is at least partially fastened to the side wall of the base.

8. The actuating device according to claim 3, wherein there are a plurality motor carriers, the plurality of motor carriers are spaced from each other in an extension direction of the third magnetic shielding portion, there are a plurality of lenses, and the plurality of lenses are spaced from each other in an axis direction of the lenses.

9. The actuating device according to claim 8, wherein there are a plurality of coils, and the plurality of coils are sleeved on the third magnetic shielding portion and spaced from each other; and
a holder is disposed on each motor carrier, the holder is provided with a limiting hole, the holder is disposed on the third magnetic shielding portion, and the coil connected to the motor carrier is clamped into the limiting hole of the holder.

10. The actuating device unlocking apparatus according to claim 4, wherein
there are a plurality of actuating magnetic components, the plurality of actuating magnetic components are successively disposed in an extension direction of the first magnetic shielding portion, at least one coil is disposed on a side of each actuating magnetic component, and the motor carrier is connected to the coil, wherein the coil drives the motor carrier to move after the coil is energized.

11. The actuating device according to claim 4, wherein the coil is fastened to the base, the actuating magnetic component is disposed on the first magnetic shielding portion, the actuating magnetic component and the motor carrier are respectively located on two sides of the first magnetic shielding portion, each motor carrier is connected to the first magnetic shielding portion, and the actuating magnetic component is configured to move after the coil is energized, to drive the first magnetic shielding portion and the motor carrier to move.

12. The actuating device according to any one of claims 2 to 9, wherein the actuating magnetic component comprises a first part and a second part that are disposed in an extension direction of the actuating magnetic component, the first part and the second part have opposite magnetism, and the coil is located on a side that is of the actuating magnetic component and that is away from the first magnetic shielding portion; and
an axis direction of the coil is perpendicular to the extension direction of the actuating magnetic component, a part of the coil is located on a side of the first part, and the other part of the coil is located on a side of the second part.

13. The actuating device according to any one of claims 2 to 11, wherein the actuating magnetic component further comprises a fourth magnetic shielding portion, wherein
two ends of the fourth magnetic shielding portion in an extension direction are respectively connected to the two second magnetic shielding portions; the first magnetic shielding portion is connected to a side of the fourth magnetic shielding portion; the first magnetic shielding portion, the two second magnetic shielding portions, and the fourth magnetic shielding portion jointly enclose the installation space; and both the coil and the actuating magnetic component are disposed on the fourth magnetic shielding portion.

14. The actuating device according to claim 4, wherein the power supply apparatus is disposed on the motor carrier.

15. The actuating device according to claim 14, wherein the power supply apparatus comprises a flexible printed circuit board, wherein
the flexible printed circuit board comprises a fixing portion and a movable portion connected to the fixing portion, wherein the fixing portion is connected to the base, one end of the movable portion is electrically connected to the motor carrier or the coil, and at least a part of the movable portion extends in a movement direction of the motor carrier.

16. The actuating device according to claim 15, wherein one end that is of the movable portion and that is connected to the motor carrier is configured as an arc-shaped section.

17. The actuating device according to claim 15, wherein one end of the movable portion is provided with a reinforcement component, and the movable portion is connected to the motor carrier by using the reinforcement component.

18. The actuating device according to claim 15, wherein the flexible printed circuit board further comprises a transition portion, and the fixing portion is connected to the movable portion by using the transition portion.

19. The actuating device according to claim 4, wherein the actuating device further comprises a position detection apparatus, wherein
the position detection apparatus comprises a Hall element and a magnetic sensing component, wherein the Hall element is disposed on the motor carrier, the magnetic sensing component is disposed on the base, and both the Hall element and the power supply apparatus are in a signal connection to a processor of the camera module; and
the Hall element is configured to detect magnetic field strength of the magnetic sensing component, and send a signal to the processor when the Hall element detects that the magnetic field strength of the magnetic sensing component reaches a preset threshold, and the processor controls, based on the signal, the power supply apparatus to stop supplying power to the coil.

20. The actuating device according to claim 4, wherein the motor carrier is connected to the first magnetic shielding portion, the coil is connected to the base, and the base is provided with an avoidance passage for the magnetic shielding component to move.

21. The actuating device according to claim 20, wherein the power supply apparatus is connected to the base.

22. The actuating device according to claim 21, wherein the actuating device further comprises a position detection apparatus, wherein
the position detection apparatus comprises a Hall element and a magnetic sensing component, wherein the Hall element is disposed on the base, the magnetic sensing component is disposed on the motor carrier, and both the Hall element and the power supply apparatus are in a signal connection to a processor of the camera module; and
the Hall element is configured to detect magnetic field strength of the magnetic sensing component, and send a signal to the processor when the Hall element detects that the magnetic field strength of the magnetic sensing component reaches a preset threshold, wherein the processor controls the power supply apparatus to stop supplying power to the coil.

23. The actuating device according to any one of claims 19 to 22, wherein the motor carrier comprises two oppositely disposed carriers, and the two carriers are respectively configured to connect to two lens connection portions that are located on two sides of an axis of the lens; and
there are at least two actuators, and the at least two actuators are respectively connected to two opposite carriers, so as to drive the two carriers to move, to drive the lens to move.

24. The actuating device according to claim 23, wherein in a plurality of motor carriers, each carrier on a same side is respectively connected to a corresponding coil in the actuator, and the first magnetic shielding portion in the actuator is connected to the base; or
each carrier on a same side is connected to the first magnetic shielding portion in the actuator, and all coils of the actuator are connected to the base.

25. The actuating device according to claim 24, wherein two first guide rails are disposed side by side on the base, the two carriers are respectively sleeved on corresponding first guide rails, and each carrier is driven by the actuator to move along a corresponding first guide rail.

26. The actuating device according to claim 25, wherein the camera module comprises two second guide rails correspondingly disposed on sides that are of the two first guide rails and that are away from a bottom of the base, the second guide rails are disposed parallel to the first guide rails, the two lens connection portions are respectively sleeved on the second guide rails, and each lens connection portion is driven by the carrier to move along a corresponding second guide rail; and
a buffer is disposed between each carrier and the lens connection portion.

27. The actuating device according to claim 26, wherein the buffer is a spring plate.

28. The actuating device according to claim 23, wherein the motor carrier further comprises a holding portion, wherein
two ends of the holding portion are respectively connected to two opposite carriers, and the holding portion is configured to hold the lens.

29. The actuating device according to claim 23, wherein at least a part of a side surface that is of each carrier and that faces toward the lens is configured as an arc-shaped surface that fits a side wall shape of the lens.

30. A camera module, comprising at least one lens and the actuating device according to any one of claims 1 to 29, wherein
an actuator of the actuating device is connected to the lens by using a motor carrier, to drive the lens to move in a specified direction.

31. An electronic device, comprising a housing and the camera module according to claim 30, wherein the camera module is disposed on the housing.
